(19) Europäisches Patentamt / European Patent Office / Office européen des brevets

(11) EP 2 699 623 B1

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(21) Anmeldenummer: **12714327.9**

(22) Anmeldetag: **18.04.2012**

(51) Int Cl.:
***C08G 77/18*** *(2006.01)* ***C08G 77/30*** *(2006.01)*
***C09D 183/08*** *(2006.01)* ***C07D 317/36*** *(2006.01)*
***B27K 3/15*** *(2006.01)*

(86) Internationale Anmeldenummer:
**PCT/EP2012/057042**

(87) Internationale Veröffentlichungsnummer:
**WO 2012/143371 (26.10.2012 Gazette 2012/43)**

(54) **FUNKTIONALISIERTE POLYORGANOSILOXANE ODER SILANE ZUR BEHANDLUNG VON LIGNOCELLULOSISCHEN WERKSTOFFEN**

FUNCTIONALIZED POLYORGANOSILOXANES OR SILANES FOR TREATING LIGNOCELLULOSE MATERIALS

POLYORGANOSILOXANES OU SILANES FONCTIONNALISÉS POUR TRAITER DES MATÉRIAUX LIGNOCELLULOSIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2011 EP 11162827**

(43) Veröffentlichungstag der Anmeldung:
**26.02.2014 Patentblatt 2014/09**

(73) Patentinhaber: **Momentive Performance Materials GmbH**
**51368 Leverkusen (DE)**

(72) Erfinder:
- **DELIS, Johannes Gerardus Petrus**
  **NL-4617 NJ Bergen op Zoom (NL)**
- **KLAASSEN, Egbert**
  **13465 Berlin (DE)**
- **HERMANN, Jörg-Walter**
  **51061 Köln (DE)**
- **MILITZ, Holger**
  **37120 Bovenden (DE)**
- **MAI, Carsten**
  **37075 Göttingen (DE)**
- **PRIES, Malte**
  **71579 Spiegelberg (DE)**
- **WAGNER, Roland**
  **53227 Bonn (DE)**
- **SOCKEL, Karl-Heinz**
  **51373 Leverkusen (DE)**
- **STACHULLA, Karl-Heinz**
  **51379 Leverkusen (DE)**
- **KÄSLER, Karl-Heinz**
  **51375 Leverkusen (DE)**
- **HOFFMÜLLER, Gunnar**
  **51519 Odenthal (DE)**

(74) Vertreter: **Gille Hrabal**
**Brucknerstrasse 20**
**40593 Düsseldorf (DE)**

(56) Entgegenhaltungen:
**EP-A1- 1 541 568** **WO-A1-2006/013146**
**DE-A1- 4 140 447** **DE-A1- 10 036 532**
**DE-C1- 19 505 892** **GB-A- 2 311 011**
**US-A- 5 859 161** **US-B1- 6 175 028**
**US-B1- 6 294 608**

- **"Silane coupling agents", , 1. Januar 2002 (2002-01-01), Seiten 1-16, XP055013006, Gefunden im Internet: URL:http://www.silicone.jp/e/catalog/pdf/silanecoupling_e.pdf [gefunden am 2011-11-24]**
- **Www.Unitedchem.Com: "Silane coupling agent guide", , 19. Juli 2012 (2012-07-19), Seiten 1-12, XP55033497, Gefunden im Internet: URL:http://www.amchro.com/PDFs/Silane/Neu-SilaneCouplingAgents08.pdf [gefunden am 2012-07-20]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft funktionalisierte Polyorganosiloxane oder Silane zur Behandlung von lignocellulosischen Werkstoffen, die geeignet sind, Holz und andere Stoffe auf Basis von Cellulose und/oder Lignin haltbar zu machen, und insbesondere gegen Witterungseinflüsse, Mikroorganismen, Insekten und Pilze zu schützen. Weiterhin wird durch die erfindungsgemäßen verwendeten Polyorganosiloxane oder Silane die Wasseraufnahme lignocellulosischer Werkstoffe, insbesondere Holz verringert, das Schrumpfverhalten lignocellulosischer Werkstoffe, insbesondere Holz verbessert. Durch den Einsatz der erfindungsgemäßen verwendeten Polyorganosiloxane oder Silane wird darüber hinaus eine insektizide Ausstattung erzielt, die den Einsatz von herkömmlichen Insektiziden entbehrlich macht.

Es ist bekannt, die Beständigkeit von Holz gegen Witterungseinflüsse durch einen Überzug von Lacken und Farben zu erhöhen. Dimensionsveränderungen des Holzes, beispielsweise aufgrund von Quellen und Schwinden aufgrund von Wasseraufnahme bzw. -abgabe, die durch äussere Feuchtigkeitsschwankungen verursacht sind, führen jedoch zum Abplatzen von derartigen Lacken.

Es ist auch bekannt, das optische Erscheinungsbild und die Beständigkeit von Holz gegen schädigende Mikroorganismen, beispielsweise verblauende Pilze bzw. Weissfäule, Braunfäule und Moderfäule durch Imprägnierung mit einer Mischung aus Arsen, ionischem Kupfer und Chrom VI zu schützen.

An diesem Holzschutzmittel ist nachteilig, dass zumindest Chrom und Arsen gesundheits- und umweltschädlich sind. Auch Kupferkomplexe und Borverbindungen werden inzwischen als aus denselben Aspekten kritisch gesehen.

Weiterhin sind wasserlösliche Holzschutzmittel bekannt, die eine quartäre Ammonium-Verbindung, wie beispielsweise Benzalkoniumchlorid enthalten. An diesen Holzschutzmitteln ist nachteilig, dass sie aufgrund ihrer sofortigen Bindung an Holz nur in den oberen Holzschichten abgelagert werden.

Weitere biozide Wirkstoffe sind 3-Jod-2-propinyl-butylcarbamat (IPBC) oder Triazole (Propiconazol, Tebuconazol).

Die bekannten organischen Holzschutzmittel werden für die Gebrauchsklassen 1, 2 und 3 nach DIN EN 351 eingesetzt und führen nicht zu einer Hydrophobierung des Holzes, sodass die Neigung des Holzes zur Wasseraufnahme und damit die Dimensionsstabilität unverändert bleiben.

Zur Verminderung der Wasseraufnahme von Holz wurden im Wesentlichen Verbindungen auf Basis von Ölen, Fetten und Wachsen (Paraffine, Silikone) verwendet.

Bekannte Holzschutzmittel, die zur Hydrophobierung eingesetzt werden und einen Gehalt an Siliziumverbindungen aufweisen, sind ebenfalls bekannt. So beschreibt die JP 2002-348567A Holzschutzmittel, die aus einer Mischung verschiedener Alkoxysilane bestehen, darunter auch Aminogruppen-haltige Alkoxysilane und Borsäure.

Die US 6294608 offenbart wässrige Emulsionen zur Behandlung mineralischer Baustoffe und Holz mit einer Mischung aus Silanen, die mit Alkyl- und Alkoxygruppen oder Aminoalkylgruppen versehen sind. Polysiloxanverbindungen werden nicht offenbart.

Die EP 0716127 offenbart Polyorganosiloxane sowie deren wässrige Mischungen, die insbesondere für die Hydrophobierung von Oberflächen, z. B. bei der Imprägnierung von Leder und Textilien aus natürlichen und/oder künstlichen Materialien sowie im Bereich der organischen und mineralischen Baustoffe und des Bautenschutzes verwendet werden.

Die EP 0716128 offenbart Aminoalkyl-Alkoxysilane, die unter anderem zur Hydrophobierung von Celluloseprodukten oder als Zusatzstoffe für Farben und Lacke eingesetzt werden können. Polyorganosiloxane werden hier nicht offenbart.

Die US 2002/0026881 beschreibt eine Zusammensetzung zur Hydrophobierung von Oberflächen, die unter anderem Silikon enthält.

Die US 4757106 offenbart die Kombination von Aminoorganosiloxanen mit Gehalten an basischen Stickstoff >0,5 % mit Siloxanen des Molgewichts >620 g/mol in weitgehend lösungsmittelfreien Formulierungen zur Ausrüstung mineralischer Untergründe.

DE 3447636 offenbart die Kombination von Aminoorganosiloxanen mit Gehalten an basischem Stickstoff >0,5 % mit einem zweiten Aminosiloxan mit basischem Stickstoff mit Gehalten von 0 bis 0,5 % und ggf. einem Siloxan mit Molmassen

< 600g/mol in Gegenwart von Lösungsmitteln. EP 0621115 und DE 4241727 offenbaren die Kombination von Aminoorganosiloxanen mit Gehalten an basischem Stickstoff >0,5 % mit wasserabweisenden Wirkstoffen, z.B. Siloxanen, ggfs. in Gegenwart einer zweiten Verbindung mit basischem Stickstoff mit Gehalten von 0 bis 0,5 % zur Behandlung von Holz. Die DE 10 2004 036918 schlägt den Einsatz von Aminoorganosiloxanen in Holzschutzmitteln vor. Die Siloxane sollen ein Molgewicht von 500 bis 500 000 g/mol aufweisen und der Substitutionsgrad der Siloxaneinheiten mit Aminogruppen bis zu 50 % betragen.

DE 4202320 beschreibt die Imprägnierung von Holz mit einen unfunktionalisierten Polydimethylsiloxan unter Nutzung von superkritischem Kohlendioxid als Trägermedium. Nachteil dieses Vorschlags ist, dass das unfunktionalisierte Polydimethylsiloxan aus dem Holz ausgetragen werden kann.

EP 680810 beschreibt die Modifizierung von Holz durch Acetylierung mit Essigsäureanhydrid bei erhöhten Temperaturen. Nachteil dieses Verfahrens ist eine ungenügende Reduktion der Wasseraufnahme des modifizierten Holzes.

Nachteil all der vorgenannten Vorschläge ist, daß ein beständiger Schutz von Holz in der Praxis bisher nur durch eine zweistufige Behandlung des Holzes erreicht werden. So wird beim sogenannten Royal-Verfahren das Holz zunächst in einem ersten Schritt mit einem organischen Kupfersalz (Cu-HDO) oder einem anorganischen Kupfersalz getränkt, und anschließend wird als zweiter Schritt eine Tränkung in Öl durchgeführt, um die Auswaschung des bioziden Kupfers zu verhindern.

Siloxane mit hydrolysierbaren Gruppen neigen nach Kontakt mit Wasser und Säuren bzw. Basen zur Kondensation, wobei Löslichkeit, Emulgierbarkeit und verminderten Penetration des Holzes. Die Imprägnierung mit den in DE 10 2004 036918 offenbarten Siloxanen ist nicht dauerhaft, da diese Siloxane nach längerer Einwirkung von Wasser wieder herausgelöst werden können.

Es ist somit Aufgabe der vorliegenden Erfindung, in einem einstufigen, praxistauglichen Verfahren Holz dauerhafter zu imprägnieren, und dabei die Neigung des Holzes zur Wasseraufnahme weiter zu verringern, die Dimensionsstabilität bei Änderung des Feuchtegehalts der Umgebung zu verbessern und den Abbau des Holzes durch Pilze, Bakterien und Insekten, wie holzzerstörende Insekten, beispielsweise Termiten, Hausbockkäfer, gewöhnliche Nagekäfer, Splintholzkäfer wirksam zu verringern. Gleichzeitig soll die Vergilbung und Vergrauung des Holzes durch Licht- und Wettereinwirkuung unterdrückt werden.

Die vorliegende Erfindung betrifft Polyorganosiloxane oder Silane zur Behandlung von lignocellulosischen Werkstoffen, wie insbesondere Holz und andere lignocellulosische Werkstoffe zur Erhöhung von deren Widerstandsfähigkeit, beispielsweise gegenüber mikrobiellem bzw. durch Pilze verursachten Abbau und/oder Witterungseinflüssen, wie beispielsweise Sonnenlicht (UV-Strahlung), Regen und andere Dimensionsschwankungen der Luftfeuchtigkeit. Die erfindungsgemäß verwendeten Polyorganosiloxane oder Silane dienen zur Verwendung als Schutzmittel für lignocellulosische Werkstoffe gegenüber Witterungseinflüssen Pilzen, Mikroben und Insekten. Des weiteren führt die Anwendung der erfindungsgemäß verwendeten Polyorganosiloxane oder Silane zur Verbesserung der Eigenschaften wie Schwind- und Quellverhalten von Holz oder lignocellulosischen Materialien durch Behandlung der lignocellulosischen Werkstoffe mit ihnen. In einem weiteren Aspekt bezieht sich die vorliegende Erfindung auf lignocellulosische Werkstoffe, wie insbesondere Holz, das mit den erfindungsgemäß verwendeten Polyorganosiloxanen und/oder Silanen behandelt wurden.

Die erfindungsgemäß verwendeten Polyorganosiloxane und/oder Silane können insbesondere zur Behandlung lignocellulosischer Werkstoffe wie Holz und Holzwerkstoffe, Spanplatten, mitteldichte Faserplatten, Oriented Strand-Boards (OSB), Papier, Kartonagen, Dämmplatten auf Lignocellulosebasis, Sperrholz, Furniere und Verpackungsmaterial mit einem Gehalt an biologisch abbaubaren Verbindungen (nachfolgend zusammenfassend als "lignocellulosische Werkstoffe" bezeichnet) verwendet werden. Die erfindungsgemäß verwendeten Polyorganosiloxane und/oder Silane weisen weiterhin eine hohe Beständigkeit gegen Auswaschen nach der Imprägnierung auf. Als weiteren Vorteil ermöglichen die erfindungsgemäß verwendeten Polyorganosiloxane und/oder Silane die Aufbringung, wie z. B. durch Imprägnierung, in einem einzigen Prozessschritt. Überraschenderweise gelingt die gewünschte Verbesserung mit bestimmten organofunktionellen Resten an kurzkettigen Polyorganosiloxanen bzw. Silanen. Aminogruppen-funktionalisierte Silikone sind vorrangig nicht erforderlich.

Die vorliegende Erfindung betrifft somit Polyorganosiloxane oder Silane zur Behandlung von lignocellulosischen Werkstoffen, dadurch gekennzeichnet, dass die Polyorganosiloxane geradkettige, verzweigte oder cyclische Polyorganosiloxane sind, die im Zahlenmittel aus 2 bis 30 Siloxy-Einheiten aufgebaut sind, die aus der Gruppe ausgewählt werden, die besteht aus:

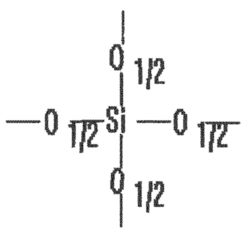
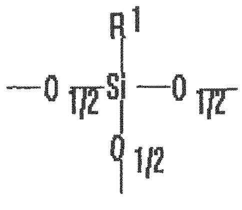
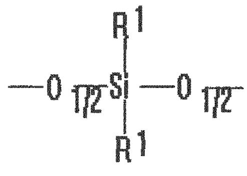
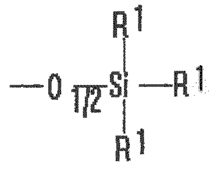

(Q) (T) (D) (M)

worin die Reste $R^1$ organische Reste darstellen, die gleich oder verschieden voneinander sein können, mit der Maßgabe, dass mindestens einer der Reste $R^1$ ein Rest $R^F$ ist, der eine funktionelle Gruppe F enthält, die ausgewählt wird aus

der Gruppe der funktionellen Gruppen, die besteht aus:

- Zwitterioniche Gruppe,
- Carbonsäre/Carboxylat-Gruppe,
- über O an Si gebundene Acyloxy-Gruppe,

und dadurch gekennzeichnet, dass die Silane die Formel (I)

$$Si\text{-}(R^1)_4 \qquad (I)$$

worin die Reste $R^1$ wie oben definiert ist, mit der Maßgabe, dass mindestens einer der Reste $R^1$ ein Rest $R^F$ ist, der eine funktionelle Gruppe F enthält, die wie oben definiert ist, und mindestens einer der Reste $R^1$ über ein Heteroatom an das Siliziumatom gebunden ist und mindestens einer der Reste $R^1$ über ein Kohlenstoffatom an das Siliziumatom gebunden ist,
oder die Formel (II)

$$(R^1)_3\text{-}Si\text{-}R^3\text{-}Si\text{-}(R^1)_3 \qquad (II)$$

aufweisen, worin $R^1$ gleich oder verschieden ist und wie für Formel (I) definiert ist und $R^3$ ein zweiwertiger, geradkettiger, verzweigter, cyclischer, aliphatischer, ungesättigter oder aromatischer Kohlenwasserstoffrest mit bis zu 30 Kohlenstoffatome ist, der eine oder mehrere Gruppen ausgewählt aus -O-, -NH-, -C(O)- und -C(S)- enthalten kann, und gegebenenfalls durch Hydroxy substituiert sein kann und über Kohlenstoff an das Siliziumatom gebunden ist,
und deren Salze.

Bevorzugt besteht die Gruppe der funktionellen Gruppen aus:

- Zwitterionische Gruppe,
- Carbonsäure/Carboxylat-Gruppe,
- über O an Si gebundene Acyloxy-Gruppen,

Die erfindungsgemäßen Polyorganosiloxane oder Silane sind insbesondere dadurch gekennzeichnet, dass die Reste $R^1$ ausgewählt werden aus der Gruppe der Reste $R^F$ und $R^N$, wobei es sich bei den Resten $R^F$ um solche Reste $R^1$ handelt, die die genannten funktionellen Gruppen F aufweisen und bei den Resten $R^N$ um Reste $R^1$ handelt, die die genannten funktionellen Gruppen F nicht aufweisen.

In einer bevorzugten Ausführungsform der Erfindung beträgt in den erfindungsgemäß verwendeten Polyorganosiloxanen der molare Anteil der Reste $R^F$, die mindestens eine funktionelle Gruppe F enthalten, von 3,33 bis 100 mol-% bezogen auf die Anzahl der Siloxyeinheiten. Bevorzugter beträgt dieser Anteil 5 bis 100 %, noch bevorzugter 5 bis 50 %, noch bevorzugter 10 bis 50 % und ganz besonders bevorzugt 10 bis 30 mol-%.

In den erfindungsgemäß verwendeten Polyorganosiloxanen beträgt der molare Anteil der verzweigenden Reste T und Q zweckmäßig 0 bis 50 %, bevorzugt 0 bis 20 %, bevorzugter 0 bis 10 %, speziell 0 bis 5 %, ganz speziell 0 %, bezogen auf die Gesamtzahl der Siloxyeinheiten.

In den erfindungsgemäß verwendeten Polyorganosiloxanen beträgt das Zahlenmittel der Siloxyeinheiten (Anzahl der Siliziumatome) zweckmäßig 2 bis 30. Das Zahlenmittel der Siloxyeinheiten in den erfindungsgemäß verwendeten Polyorganosiloxanen wird beispielsweise durch Gelpermeationschromatographie (GPC) nach entsprechender Eichung vorzugsweise mit Polystyrol als Standard bestimmt. Bevorzugt beträgt das Zahlenmittel der Siloxyeinheiten 2 bis 20, bevorzugter 2 bis 15, noch bevorzugter 2 bis 12, noch bevorzugter 2 bis 7.

Es liegt im Rahmen der Erfindung Mischungen der erfindungsgemäß verwendeten Polyorganosiloxane untereinander, sowie Mischungen von erfindungsgemäß verwendeten Polyorganosiloxanen und Silanen zu verwenden. Bei Verwendung von Mischungen von Polyorganosiloxanen entstehen bi-, tri- und höhermodale Verteilungen. In diesem Fall sind binäre Mischungen mit bimodaler Verteilung bevorzugt. Eine bevorzugte Ausführungsform ist dabei die Verwendung von Mischungen von kurzkettigen Polyorganosiloxanen mit im Mittel 2 bis 15 Siloxyeinheiten und längerkettigen Polyorganosiloxanen mit 16 bis 30 Siloxyeinheiten. Die Verwendung derartiger Mischungen hat den Vorteil, dass in den lignocellulosischen Werkstoffen unterschiedliche Wirkorte bedient werden. So finden sich die längerkettigen Polyorganosiloxane bevorzugt in den Zellzwischenräumen (Lumen) wohingegen die kürzerkettigen Polyorganosiloxane sich stärker in den Zellen bzw. Zellwänden anreichern. Dadurch wird insgesamt eine höhere Wirkstoffdurchdringung und -konzentration und mithin eine verbesserte Wirkung erzielt.

Die funktionellen Gruppen F, welche die erfindungsgemäß verwendeten Polyorganosiloxane bzw. Silane tragen, dienen einerseits der Verbesserung der Löslichkeit der Polyorganosiloxane bzw. Silane in der bevorzugt wässrigen Darreichungsform, andererseits der Verankerung der Polyorganosiloxane bzw. Silane in den lignocellulosischen Werkstoffen, insbesondere in den Zellen und Zellwänden der genannte Werkstoffe insbesondere zur Erhöhung der Dimensionsstabilität der Werkstoffe bzw. des Schrumpfverhaltens in Gegenwart quellender Lösemittel insbesondere Feuchtigkeit. Unter diesen Gesichtspunkten erweisen sich folgende funktionelle Gruppen F als besonders geeignet:

- über O an Si gebundene Acyloxy-Gruppe,

In den erfindungsgemäß verwendeten Polyorganosiloxanen oder Silanen werden die organischen Substituenten $R^1$ zweckmäßig aus der Gruppe ausgewählt, die besteht aus:
geradkettigen, cyclischen oder verzweigten, gesättigten, ungesättigten oder aromatischen Kohlenwasserstoffresten mit bis zu 100 Kohlenstoffatomen, die gegebenenfalls eine oder mehrere Gruppen, ausgewählt aus

-O-,

-S-,

$-NR^2-$,

worin $R^2$ Wasserstoff, einen einwertigen, geradkettigen, cyclischen oder verzweigten, gesättigten, ungesättigten oder aromatischen Kohlenwasserstoffrest mit bis zu 60 Kohlenstoffatomen darstellt, der eine oder mehrere Gruppen ausgewählt aus -O-, -S-, -NH-, -C(O)- und -C(S)- enthalten kann, und der gegebenenfalls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Amino, Alkylamino, Dialkylamino, Ammonium, Polyetherresten und Polyetheresterresten substituiert sein kann, wobei wenn mehrere Gruppen $-NR^2$ vorliegen, diese gleich oder verschieden sein können,

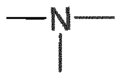

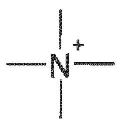

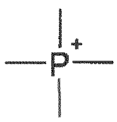

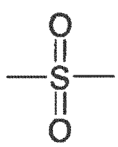

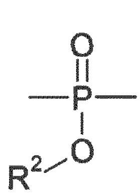

,

worin $R^2$ wie zuvor definiert ist,

$-P(R^2)_2$, worin $R^2$ wie zuvor definiert ist,

-C(O)- und

-C(S)- enthalten können,

und durch einen oder mehrere Reste substituiert sein kann, die ausgewählt sind aus der Gruppe, die besteht aus:

- Hydroxyl,
- Mercapto (-SH oder $-S^-$),
- Isocyanato,
- Halogen (wie Chlor, Fluor),
- einem Polyetherrest mit bis zu 60 Kohlenstoffatomen, der gegebenenfalls eine oder mehrere Amino-, Mono- oder Dialkylamino, oder Arylamino-Gruppen tragen kann,
- einem Saccharid-haltigem organischen Rest,

oder zwei Substituenten $R^1$ aus verschiedenen Siloxyeinheiten bilden gemeinsam einen geradkettigen, verzweigten oder cyclischen, gegebenenfalls durch -O-, -S-, -C(O)-, -NH- unterbrochenen und gegebenenfalls durch OH substituierten Alkandiylrest mit 2 bis 20 Kohlenstoffatomen zwischen zwei Siliziumatomen,
wobei die Anbindung an Silizium über ein Kohlenstoffatom und/oder ein Heteroatom erfolgen kann. Diese Reste $R^1$ werden wie vorstehend erwähnt ausgewählt aus der Gruppe der Reste $R^F$ und $R^N$, wobei es sich bei den Resten $R^F$ um solche Reste $R^1$ handelt, die die genannten funktionellen Gruppen F aufweisen und bei den Resten $R^N$ um Reste $R^1$ handelt, die die genannten funktionellen Gruppen F nicht aufweisen.

Bevorzugt weisen die Reste $R^1$, $R^2$ und $R^3$ in den erfindungsgemäß verwendeten Polyorganosiloxanen oder Silanen, einschließlich $R^F$ und $R^N$ keine Aminogruppen auf. Ausgenommen davon sind solche Aminogruppen-haltigen Reste, die eine zwitterionische Gruppe, wie eine Betain- oder Sulfobetain-Gruppe, aufweisen, oder solche Reste, worin die Aminogruppe über das Stickstoffatom an das Siliziumatom gebunden ist.

$R^2$ ist bevorzugt Wasserstoff, gesättigter Kohlenwasserstoffrest mit bis zu 24 Kohlenstoffatomen, der eine oder zwei Gruppen ausgewählt aus -O-, -S-, -NH-, -C(O)- und -C(S)- enthalten kann, und der gegebenenfalls durch eine oder zwei Hydroxylgruppe substituiert sein kann.

$R^3$ ist bevorzugt ein zweiwertiger gesättigter aliphatischer Kohlenwasserstoffrest mit bis zu 20 Kohlenstoffatomen, der eine oder zwei Gruppen -O- enthalten kann, und gegebenenfalls durch Hydroxy substituiert sein kann und über Kohlenstoff an das Siliziumatom gebunden ist,
Die Reste $R^N$ schließen bevorzugt ein: n-, iso-, oder tert.-$C_1C_{22}$-Alkyl, $C_2$-$C_{22}$-Alkoxyalkyl, $C_5$-$C_{30}$-Cycloalkyl, $C_6$-$C_{30}$-Aryl, $C_6$-$C_{30}$-Aryl($C_1$-$C_6$)alkyl, $C_6$-$C_{30}$-Alkylaryl, $C_2$-$C_{22}$-Alkenyl, $C_2$-$C_{22}$-Alkenyloxyalkyl, welche Reste sämtlich durch ein oder mehrere (wie ein bis fünf) Substituenten, wie Hydroxy Halogen (insbesondere Fluor) substituiert sein können und ein oder mehrere Ethergruppen aufweisen können, wie $H_3C$-, $CH_3CH_2$-, $CH_3CH_2CH_2$-, $(CH_3)_2CH$-, $C_8H_{17}$- and $C_{10}H_{21}$-, $H_2C$=CH-O-$(CH_2)_{1-6}$, cycloaliphatische Reste, wie Cyclohexylethyl, Limonyl, Norbonenyl, Phenyl, Tolyl, Xylyl, Benzyl und 2-Phenylethyl, Halogen($C_1$-$C_{10}$)alkyl, wie $C_fF_{fn+1}CH_2CH_2$- worin f= 1 bis 8 ist, wie $CF_3CH_2CH_2$-, $C_4F_9CH_2CH_2$-, $C_6F_{13}CH_2CH_2$-, $C_2F_5$-O($CF_2$-$CF_2$-O)$_{1-10}$$CF_2$-, F[CF($CF_3$)-$CF_2$-O]$_{1-5}$-$(CF_2)_{0-2}$-, $C_3F_7$-OCF($CF_3$)- und $C_3F_7$-OCF($CF_3$)-$CF_2$-OCF($CF_3$)-.

Besonders bevorzugt sind Methyl, Vinyl, Phenyl, 3,3,3-Trifluoropropyl, am meisten bevorzugt ist $R^N$ = Methyl.

In den erfindungsgemäß verwendeten Polyorganosiloxanen oder Silanen werden die Reste $R^F$ bevorzugt aus der Gruppe ausgewählt, die besteht aus:

- Zwitterionische Gruppen, wie Carbobetaingruppen enthaltenden Resten, ausgewählt aus:

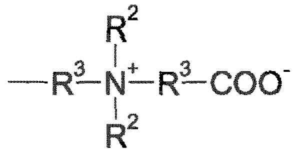

bzw. deren Neutralform:

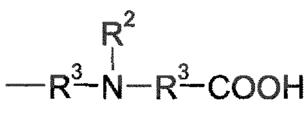

und Salze davon,
worin $R^2$ und $R^3$ gleich oder verschieden sind und wie oben definiert sind, Sulfobetaingruppen enthaltenden Resten,

ausgewählt aus:

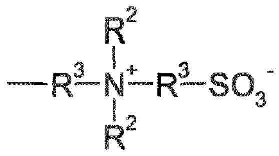

bzw. deren Neutralform

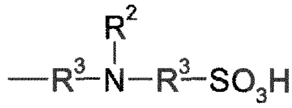

und deren Salze,
worin $R^2$ und $R^3$ gleich oder verschieden sind und wie oben definiert sind,

- Carbonsäure-/Carboxylatgruppen enthaltenden Resten, ausgewählt aus:

$$-R^3-COOR^2, -R^3-COO^-$$

worin $R^2$ und $R^3$ jeweils wie oben definiert sind,

- über O an Si gebundene Acyloxy-Gruppen, ausgewählt aus:

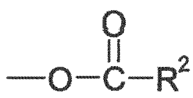,

worin $R^2$ wie oben definiert ist,

- über O an Si Alkoxy-Gruppen, ausgewählt aus:
$-OR^2$, worin $R^2$ wie oben definiert ist, und die Kationen, welche die anionischen funktionellen Gruppen neutralisieren, ausgewählt werden aus der Gruppe, die besteht aus:

Ammoniumgruppen ($N^+(R^2)_4$, worin $R^2$ wie oben definiert ist),
Phosphoniumgruppen ($P^+(R^2)_4$, worin $R^2$ wie oben definiert ist), sowie ein- bis dreiwertigen Metallkationen,

und die Anionen, welche die kationischen funktionellen Gruppen neutralisieren, ausgewählt werden aus der Gruppe, die besteht aus:

Halogenid,
Hydroxid,
Borat,
Sulfat,
Phosphat,
Nitrat und
Carboxylat.

Besonders bevorzugte Gruppen $R^F$ schließen ein:

- Carbonsäure-/Carboxylatgruppen enthaltende Reste, ausgewählt aus:

$$-R^3-COOR^2$$

,

$$-R^3-COO^-$$

worin $R^2$ und $R^3$ jeweils wie oben definiert sind,

- über O an Si gebundene Acyloxy-Gruppen, ausgewählt aus:

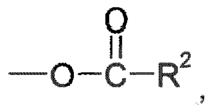

worin $R^2$ wie oben definiert ist,

Bevorzugte Kationen, welche die anionischen funktionellen Gruppen neutralisieren, werden ausgewählt aus der Gruppe, die besteht aus: Ammoniumgruppen ($N^+(R^2)_4$, worin $R^2$ wie oben definiert ist), Phosphoniumgruppen ($P^+(R^2)_4$, worin $R^2$ wie oben definiert ist), sowie ein- bis dreiwertigen Metallkationen, wie beispielsweise $Na^+$, $K^+$, $Fe^{2+}$, $Fe^{3+}$, $Al^{3+}$, $Cu^{2+}$, $Zn^{2+}$ und $Cr^{3+}$.

Bevorzugte Anionen, welche die kationischen funktionellen Gruppen neutralisieren, werden ausgewählt aus der Gruppe, die besteht aus:

Halogenid,
Hydroxid,
Borat,
Sulfat,
Phosphat,
Nitrat und
Carboxylat.

Bevorzugt werden erfindungsgemäß Polyorganosiloxane, die mindestens einen Rest der Formel $M^F$ enthalten:

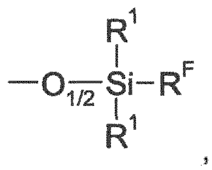

worin $R^1$ wie oben definiert, bevorzugt $R^N$, wie oben definiert ist, und $R^F$ wie oben definiert ist.

In einer weiteren bevorzugten Ausführungsform werden Polyorganosiloxane verwendet, die die Formel:

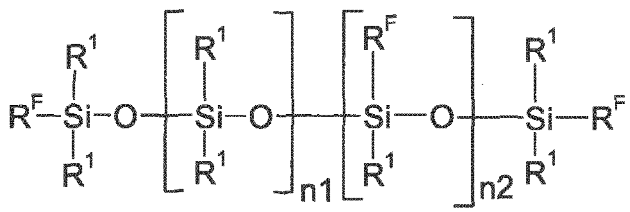

(III)

aufweisen, worin n1 + n2 = 1 bis 28, bevorzugt 1 bis 20, mehr bevorzugt 1 bis 15, besonders bevorzugt 5 bis 15 ist, und $n2 \geq 0$, bevorzugt 1 bis 28, mehr bevorzugt 1 bis 10, besonders bevorzugt 1 bis 5, und $R^1$ und $R^F$ wie zuvor definiert sind.

Besonders bevorzugt werden erfindungsgemäß Polyorganosiloxane, die die Formel

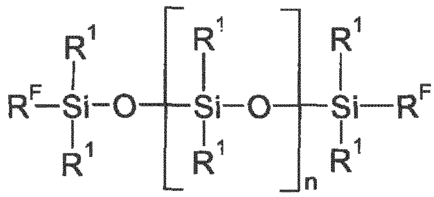

(VI)

aufweisen, worin n im Zahlenmittel 0 bis 28 ist, bevorzugt 0 bis 20, mehr bevorzugt 0 bis 15, besonders bevorzugt 5 bis 15 ist, und $R^1$ wie oben definiert, bevorzugt $R^N$, wie oben definiert, ist, und $R^F$ wie oben definiert ist.

In einer weiteren bevorzugten Ausführungsform werden Polyorganosiloxane verwendet, die die Formel:

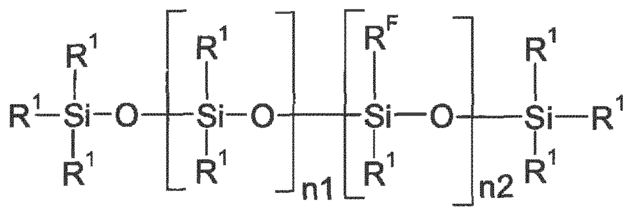

(IV)

verwendet worin n1 + n2 = 1 bis 28, und n2 ≥ 1, bevorzugt 1 bis 28, mehr bevorzugt 1 bis 10, besonders bevorzugt 1 bis 5, und $R^1$ und $R^F$ wie zuvor definiert sind.

In einer weiteren bevorzugten Ausführungsform werden cyclische Polyorganosiloxane verwendet, die die Formel:

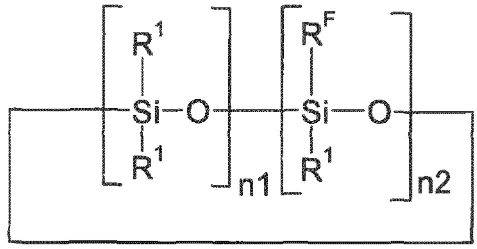

(V)

verwendet, worin n1 + n2 = 3 bis 7, und n2 ≥ 1, bevorzugt 1 bis 7, mehr bevorzugt 1 bis 5, besonders bevorzugt 1 bis 3, und $R^1$ und $R^F$ wie zuvor definiert sind.

Es ist weiterhin möglich, dass sich der Rest $R^F$ an einem Siliciumatom befindet, welches eine T-Einheit bildet.

In einer weiteren bevorzugten Ausführungsform der Erfindung werden mehrere Typen der erfindungsgemäßen Verbindungen gleichzeitig eingesetzt.

Die erfindungsgemäßen Polyorganosiloxane oder Silane können auch in Kombination mit weiteren von den erfindungsgemäßen Polyorganosiloxanen oder Silanen verschiedenen Polyorganosiloxanen oder Silanen verwendet werden. Diese von den erfindungsgemäßen Polyorganosiloxanen oder Silanen verschiedenen Polyorganosiloxane oder Silane können beispielsweise auch funktionelle Gruppen aufweisen, die von $R^F$ verschieden sind, und die zum Beispiel Amino-Gruppen ($NH_2$, $NHR^1$, $NR^1_2$, worin $R^1$ einen organischen Rest darstellt) oder Ammoniumgruppen ($NH_4^+$, $NR^1H_3^+$, $NR^1_2H_2^+$, $NR^1_3H^+$ und $NR^1_4{}^+$, worin $R^1$ einen organischen Rest darstellt) enthalten.

Besonders bevorzugt ist dabei eine Kombination von Polyorganosiloxanen oder Silanen mit basischen funktionellen Gruppen und Polyorganosiloxanen oder Silanen mit sauren funktionellen Gruppen. Die Bezeichnung "basisch" schließt dabei sowohl die basischen funktionellen Gruppen, wie Aminogruppen, als auch ihre Salze bzw. protonierten Formen wie Ammoniumgruppen ein. Synonym wird auch der Begriff "kationische" Polyorganosiloxane oder Silane verwendet. Die Bezeichnung "sauer" schließt dabei sowohl die sauren funktionellen Gruppen, wie Carboxylgruppen, als auch ihre Salze, wie Carboxylate ein. Synonym wird auch der Begriff "anionische" Polyorganosiloxane oder Silane verwendet. Insbesondere sind bevorzugt: Kombinationen von sogenannten kationischen Polyorganosiloxanen oder Silanen, welche zum Beispiel Aminogruppen (wie die vorstehend genannten), Ammoniumgruppen (wie die vorstehend genannten), quaternäre Ammoniumgruppen (wie die vorstehend genannten), quaternäre Phosphoniumgruppen (wie die vorstehend genannten) aufweisen, mit sogenannten anionischen Polyorganosiloxanen oder Silanen, welche zum Beispiel Carbonsäuregruppen/Carboxylatgruppen, Sulfonsäuregruppen/ Sulfonatgruppen, Schwefelsäurehalbestergruppen/Sulfatgruppen, Phosphorsäureestergruppen/Phosphatgruppen, Phosphonsäureestergruppen/ Phosphonatgruppen, Phosphorigsäureestergruppen/Phosphitgruppen, Xanthogenatgruppen/Xanthogenatestergruppen aufweisen.

Das molare Verhältnis der kationischen zu den anionischen Gruppen in den Polyorganosiloxanen oder Silanen ist bevorzugt wie folgt zu wählen:

kationisch : anionisch = 90 : 10 bis 10 : 90, bevorzugt 70 : 30 bis 30 : 70, besonders 60 : 40 bis 40 : 60.

Dementsprechend betrifft die vorliegende Erfindung des weiteren die Verwendung einer Zusammensetzung enthaltend:

a) mindestens ein Polysiloxan und/oder Silan wie in einem der Ansprüche 1 bis 10 definiert, die eine funktionelle Gruppe F ausgewählt aus der Gruppe der sauren funktionellen Gruppen:

- Zwitterionische Gruppe,
- Carbonsäure/Carboxylat-Gruppe,

(jeweils wie zuvor definiert)
aufweisen, sowie
b) mindestens ein Polysiloxan und/oder Silan, die eine basische funktionelle Gruppe aufweisen, ausgewählt aus Amino-Gruppen, Ammonium-Gruppen, Phosphonium-Gruppen und Phosphin-Gruppen (jeweils wie zuvor und nachstehend definiert).

Das molare Verhältnis der kationischen Gruppen (entsprechend Komponente b)) zu den anionischen Gruppen (entsprechend Komponente a)) in den Polyorganosiloxanen oder Silanen ist dabei bevorzugt wie folgt zu wählen: kationisch : anionisch = 90 : 10 bis 10 : 90, bevorzugt 70 : 30 bis 30 : 70, besonders 60 : 40 bis 40 : 60.

Das Anteil der kationischen Komponente b) beträgt dabei beispielsweise 1-90 Gew.-%, vorzugsweise 5-80 Gew.-% bezogen auf die Gesamtmenge von Komponente a) und b).

Es liegt weiterhin im Rahmen der Erfindung, die kationischen und /oder die anionischen Polyorganosiloxane oder Silane partiell durch kationische und/oder anionische Kohlenwasserstoffverbindungen zu ersetzen, wobei die Begriff kationisch und anionisch wie vorstehend erläutert zu verstehen sind. Beispiele sind kationische oder anionische Tenside, wie langkettige Alkyl oder ArylSulfonate, langkettige Alkylammoniumverbindungen.

Es ist weiterhin erfindungsgemäß möglich die zwitterionischen, insbesondere betainartigen Polyorganosiloxane oder Silane mit den kationischen oder anionischen Polyorganosiloxanen oder Silanen zu kombinieren.

In einer bevorzugten Ausführungsform haben die erfindungsgemäßen Polyorganosiloxane oder Silane ein Molekulargewicht von <2000 g/mol, bevorzugt < 1500 g/mol, besonders bevorzugt < 1000 g/mol aufweisen.

Für die genannten Polyorganosiloxane der Formeln (III), (IV) und (VI) beträgt n1+n2 bevorzugt 0 bis 18, bevorzugter 0 bis 13, noch bevorzugter 0 bis 10, noch bevorzugter 0 bis 5, wobei mindestens eine Siloxy-Gruppe mit $R^F$ vorliegen muß.

Die Synthese Thiosulfatgruppen enthaltender Polysiloxan- oder Silanverbindungen ist ebenfalls bekannt (Silicone, Chemie und Technologie, Vulkan Verlag Essen 1989, S. 121).

Phosphin-Gruppen enthaltende Polysiloxan- oder Silanverbindungen sind z.B. durch Alkylierung Dialkyl- bzw. Diarylphosphinen mit von halogenalkylsubstituierten Siloxanen oder Silanen mit zugänglich (Organikum, VEB Deutscher Verlag der Wissenschaften 1988, 17.Auflage, S 203).

Phosphonium-Gruppen enthaltende Polysiloxan- oder Silanverbindungen sind z.B. durch Alkylierung von Trialkyl- bzw. Triarylphosphinen mit halogenalkylsubstituierten Siloxanen oder Silanen oder durch Alkylierung der vorstehend erwähnten Phosphin-Gruppen enthaltenden Polysiloxan- oder Silanverbindungen zugänglich (Organikum, VEB Deutscher Verlag der Wissenschaften 1988, 17. Auflage, S 203).

EpoxyPolyorganosiloxane oder -Silane werden vorteilhaft durch Hydrosilylierung von epoxyfunktionellen ungesättigten Verbindungen, z.B. Allylglycidether und Vinylcyclohexenoxid, mit SiH funktionellen Precursoren unter Pt Katalyse hergestellt (Silicone, Chemie und Technologie, Vulkan Verlag Essen 1989, S. 90).

Carbonatfunktionelle Polyorganosiloxane oder Silane können einerseits durch Hydrosilylierung von carbonatfunktionellen ungesättigten Verbindungen, z.B. Allylcarbonat, mit SiH funktionellen Precursoren unter Pt Katalyse hergestellt werden (US 5672338, US 5686547). Alternativ dazu können sie aus entsprechenden Epoxiden durch Einschub von $CO_2$ hergestellt werden (DE 19505892) oder durch Reaktion von Aminoorganosiloxanen oder Silanen mit bifunktionellen Carbonatkupplern (WO 2005/058863).

Mit Isocyanat-Gruppen einschließlich blockierter Isocyanatgruppen modifizierte Polyorganosiloxane oder Silane sind durch Umsetzung von mit CHaciden Gruppen funktionalisierten Polyorganosiloxanen, wie Hydroxy- oder Amino-funktionellen Polyorganosiloxanen oder Silanen mit einem Überschuß von di- oder höherfunktionellen Isocyanaten, oder durch Umsetzung von Amino-funktionellen Polyorganosiloxanen oder Silanen mit $COCl_2$, oder durch Pyrolyse von Carbamato-funktionellen Polyorganosiloxanen oder Silanen erhältlich.

Harnstoff-Gruppen-enthaltende Polyorganosiloxane oder Silane sind beispielsweise durch die Umsetzung der vorstehend erwähnten Isocyanat-funktionellen Polyorganosiloxanen oder Silanen mit Aminen erhältlich.

Urethan- und Harnstoffeinheiten-enthaltende Polyorganosiloxane oder Silane sind einerseits durch Reaktion von hydroxy- bzw. aminofunktionellen Precursoren mit Isocyanaten zugänglich (Organikum, VEB Deutscher Verlag der Wissenschaften 1988, 17.Auflage, S 429). Alternativ dazu können Urethane auch durch Reaktion von Aminoorganosiloxanen oder Silanen mit z.B. Cyclocarbonaten oder aber carbonatfunktionellen Siloxanen oder Silanen mit Aminen gewonnen werden (US 5672338).

Amidfunktionelle Siloxane oder Silane sind beispielsweise durch Reaktion von Aminoorganosiloxanen oder

Silanen mit Lactonen zugänglich (DE 4318536, Bsp. 22).

Schiff-Basen-, Imingruppen und Enamingruppen-enthaltende Siloxane oder Silane sind beispielsweise durch Reaktion von Aminosiloxanen oder Silanen mit Aldehyden oder Ketonen zugänglich, wie zum Beispiel in der WO2008113820, Beispiel 1 und DE 4318536, Beispiel 20a demonstriert.

Halbacetal- und Acetalgruppen enthaltende Siloxane und Silane sind beispielsweise durch Reaktion von hydroxyfunktionellen (COH funktionellen) Siloxanen mit Aldehyden unter Ausbildung von Strukturen, die Halbacetal bzw. Acetalfunktionen enthalten, zugänglich (Organikum, VEB Deutscher Verlag der Wissenschaften, Berlin 1988, 17. Auflage, S. 396-400), oder wie oben beschrieben durch Umsetzung von aldehydgruppen-enthaltenden Polyorganosiloxanen oder Silanen mit ein- oder mehrwertigen (insbesondere zweiwertigen) Alkoholen.

Aldehydgruppen-enthaltende Siloxane oder Silane sind beispielsweise durch Reaktion von Aminosiloxanen mit Dialdehyden, z.B. C2 bis C5 Dialdehyde, unter Ausbildung von Strukturen, die beispielsweise die Kombination von Schiff-Basen mit Aldehydfunktionen bzw. Enaminen und Aldehydfunktionen enthalten zugänglich. Alternativ können hydroxyfunktionelle (COH funktionelle) Siloxane mit Dialdehyden unter Ausbildung von Strukturen, die Halbacetal und Aldehyd bzw. Acetal und Aldehydfunktionen enthalten, reagieren. (Organikum, VEB Deutscher Verlag der Wissenschaften, Berlin 1988, 17.Auflage, S. 390-400). Weiterhin können hydroxyfunktionelle (COH funktionelle) Siloxane mit Epoxyaldehyden zu diesen Zielprodukten reagieren. Es ist ebenfalls möglich, hydroxyfunktionelle (COH funktionelle) Siloxane durch katalytische Dehydrierung an Cu oder Ag Katalysatoren in Aldehyde zu überführen. Eine weitere bevorzugte Gruppe von aldehydfunktionellen Siloxanen stellen Verbindungen dar, die durch Reaktion von epoxyfunktionellen Siloxanen, z.B. basierend auf der Addition von Allylglycidether oder Vinylcyclohexenoxid and SiH Vorstufen, mit Aldehydcarbonsäuren, z.B. Glyoxylsäure HC(=O)C(=O)OH, gewonnen werden können. Die Herstellung kann z.B. in Anlehnung an US 5093518, Beispiel 3 erfolgen.

Siloxan- oder Silanbasierte Carbobetaine sind beispielsweise durch Reaktion von tertiären Aminostrukturen mit Na-Chloracetat zugänglich (Silicone, Chemie und Technologie, Vulkan Verlag Essen 1989, S. 121). Andererseits können sie durch Reaktion von Epoxysiloxanen oder Silanen mit den Alkalisalzen von Aminosäuren gewonnen werden (DE 10036532, Bsp. 1).

Siloxan- oder Silanbasierte Sulfobetaine sind beispielsweise durch Reaktion von tertiären Aminostrukturen mit Sultonen (DE 4140447, Bsp. 1) zugänglich. Alternativ dazu können sie durch Reaktion von Epoxysiloxanen oder -Silanen mit den Alkalisalzen von Aminosulfonsäuren, z.B. Taurin, in Analogie zu den entsprechenden Carbobetainen gewonnen werden.

Siloxan- oder Silanbasierte Carbonsäuren können beispielsweise durch Reaktion von hydroxy- oder aminofunktionellen Precursoren mit Carbonsäureanhydriden, z.B. Phthalsäureanhydrid, Bernsteinsäureanhydrid und Maleinsäureanhydrid, hergestellt werden (DE 4318539, Bsp. 1).

Acetoxyfunktionalisierte Siloxane oder Silane z.B. mit über O an Si gebundene Acyloxy-Gruppen sind durch Reaktion von Silanolen mit Acetoxysilanen zugänglich (Silicone, Chemie und Technologie, Vulkan Verlag Essen 1989, S. 58). Alternativ dazu können beispielsweise Silanole und Alkoxysilane mit Säureanhydriden zu diesen Zielprodukten reagieren. Es ist zur Synthese derartiger Verbindungen weiterhin möglich, Siloxanbindungen in Gegenwart von Säureanhydriden und Katalysatoren zu spalten (V. Bazant, Organosilicon Compounds, Band 1, Academic Press New York, 1965, S. 61-64).

Siloxan- oder Silan-basierte Sulfonsäurederivate können beispielsweise durch Reaktion von epoxyfunktionellen Precursoren mit Natriumhydrogensulfit hergestellt werden (Silicone, Chemie und Technologie, Vulkan Verlag Essen 1989, S. 121).

Siloxan- oder Silanbasierte Sulfatderivate können beispielsweise durch Reaktion von hydroxyfunktionellen Precursoren mit Amidoschwefelsäure hergestellt werden (DE 4318539, Bsp. 3).

Die Synthese siliconbasierter Phosphatderivate oder Phosphorsäurederivate ist z.B. in US 5859161 und US 6175028 beschrieben.

Alkoxyfunktionelle Siloxane sind beispielsweise durch alkalische Äquilibrierung von Alkoxysilanen mit Cyclosiloxanen zugänglich (Silicone, Chemie und Technologie, Vulkan Verlag Essen 1989, S. 5).

Phosphonsäureester/Phosphonat-Gruppen-enthaltende Polyorganosiloxane oder Silane sind beispielsweise durch die Umsetzung von Alkenyl-Polyorganosiloxanen oder -Silanen mit Phosphorigsäureestern sind erhältlich.

Phosphorigsäureester/Phosphit-Gruppen-enthaltende enthaltende Polyorganosiloxane oder Silane sind beispielsweise durch die Umsetzung von Hydroxyalkyl-Polyorganosiloxanen oder -Silanen mit Phosphorigsäureestern bzw. Phosphiten erhältlich.

Xanthogenat/Xanthogenatester-Gruppen-enthaltende Polyorganosiloxane oder -silane sind beispielsweise durch die Umsetzung von Alkolaten der AlkoxyPolyorganosiloxane oder -silane mit Schwefelkohlenstoff und gegebenenfalls anschließender Umsetzung mit Alkylhalogeniden zu Xanthogenatestern erhältlich.

Über N an Si gebundenen Organoamino-Gruppen-enthaltende Polyorganosiloxane oder -Silane sind beispielsweise durch die Umsetzung von Halogen-Polyorganosiloxanen oder-Silanen mit Aminen erhältlich.

Die Erfindung betrifft weiterhin Zusammensetzungen enthaltend mindestens ein Polyorganosiloxan und/oder

Silan, wie vorstehend definiert, und mindestens ein Lösungsmittel und/oder mindestens einen bioziden Wirkstoff zur Behandlung von lignocellulosischen Werkstoffen. Die erfindungsgemäßen Zusammensetzungen enthaltend mindestens ein der erfindungsgemäß definierten funktionalisierten Polyorganosiloxane und/oder Silane können beispielsweise einen Lösungsvermittler und/oder einen Emulgator enthalten, der insbesondere zu einer Stabilitätserhöhung der erfindungsgemäßen Zusammensetzungen führt, wie beispielsweise eine wässrige Zusammensetzung, z.B. eine Emulsion, oder eine Lösung oder eine Dispersion in einem Lösungsmittel.

Als Lösungsvermittler oder Emulgator kommen insbesondere aminomodifizierte Silikone, quartäre Fettaminalkoholate, insbesondere ein quartäres Fettaminethanolat in Frage.

Als Lösungsmittel kommen je nach Applikationsverfahren in Frage: Kohlendioxid, Alkohol, Wasser, Ethan, Ethylen, Propan, Butan, Schwefelhexafluorid, Stickoxide, Ionische Flüssigkeiten, Chlortrifluormethan, Monofluormethan, Methanol, Ethanol, DMSO, Isopropanol, Aceton, THF, Essigsäure, Ethylenglykol, Polyethylenglykol, Essigsäureanhydrid, N,N-Dimethylanilin, Methan, Pentan, Hexan, Cyclohexan, Toluol, Heptan, Benzol, Ammoniak, Propanol, etc. und Mischungen, bevorzugter Wasser, organische Lösungsmittel, wie Polyalkohole, wie insbesondere Propylenglycol, Ethylenglycol oder Butyldiglycol, Ethanol, Propanol, Isopropanol, n-Butanol, Furfurylalkohol, THF, DMSO, Dioxan, aliphatische und/oder chlorierte Kohlenwasserstoffe etc. oder Mischungen davon.

Eine bevorzugte Emulsion der erfindungsgemäß definierten funktionalisierten Polyorganosiloxane und/oder Silane enthält:

a) wenigstens ein erfindungsgemäß definiertes funktionalisiertes Polyorganosiloxan und/oder Silan (gegebenenfalls in Kombination mit einem oder mehreren nicht-erfindungsgemäßen Polyorganosiloxan und/oder Silan) in einer Konzentration von 1-80 Gew.-%, vorzugsweise 5-60 Gew.-%, am meisten bevorzugt von 10-50 Gew.-% (wobei diese Menge die Gesamtmenge der erfindungsgemäß definierten funktionalisierten Polyorganosiloxane und/oder Silane und der nicht-erfindungsgemäßen Polyorganosiloxane und/oder Silane einschließt),
b) Wasser in einer Menge von 99 bis 20 Gew.-%, vorzugsweise 95 bis 40 Gew.-%, am meisten bevorzugt 90 bis 50 Gew.-%,

jeweils bezogen auf die Gesamtmenge der Komponenten a) und b),
und gegebenenfalls:

c) einen oder mehrere Emulgatoren in einer Menge von 0-20 Gew.-%, bevorzugt von 0,5-20 Gew.-%, bevorzugter von 1-15 Gew.-%, am meisten bevorzugt von 2-10 Gew.-%, vorzugsweise ausgewählt aus ionischen oder nichtionischen Emulgatoren
d) eine oder mehrere Verbindungen, um den pH-Wert der Emulsion zu steuern, wie eine Base oder Säure, vorzugsweise eine Säure, wie Essigsäure,
e) ein oder mehrere Lösungsmittel in einem Bereich von 0-50 Gew.-%, bevorzugt 1-50 Gew.-%, vorzugsweise 1-20 Gew.-%,

wobei die Mengen der gegebenenfalls vorhandenen Komponenten c) bis e) sich auf die Gesamtmenge der Emulsion beziehen.

Das Gewichtsverhältnis der Komponenten [a) + b)] zu [c) + d) + e)] beträgt dabei von 100 : 0 bis 100 : 70, bevorzugter 100 : 1 bis 100 : 30.

Der pH-Wert einer solchen Emulsion liegt bevorzugt im Bereich von 2-12, vorzugsweise von 2-7, am meisten bevorzugt von 3 bis 5, was die Stabilität der Emulsion im Allgemeinen erhöht. Entsprechend wird gegebenenfalls die Menge der Komponente d) gewählt.

Beispiele der in den erfindungsgemäßen Zusammensetzungen wahlweise enthaltenen bioziden Wirkstoffe schließen beispielsweise ein:

Borverbindungen, wie beispielsweise Borax, Borat, Borsäure, Borsäureester,
Kupferverbindungen, wie wasserlösliche Kupferverbindungen, wie beispielsweise Kupfer(II)-Salze (Kupfer(II)-oxid, Micronized Copper, Kupfer(II)-sulfat, Kupfer(II)-hydroxidcarbonat, Bis-(N-cyclohexyldiazeniumdioxy)kupfer(II),
Mischungen von Borverbindungen und Kupferverbindungen,
organische biozide Verbindungen, wie beispielsweise Triazole (wie Azaconazol, Cyproconazol, Propiconazol, Tebuconazol, TCMTB), Phenylsulfamide (wie Dichlorfluanid, Tolylfluanid), Carbamaten (wie IPBC, Carbendazim), aromatischen Fungizide (wie ortho-Phenylphenol, Chlorothalonil) und weitere Fungizide (wie Bethoxazin, Isothiazolon), synthetische Pyrethroide (wie Permethrin, Cypermethrin, Cyfluthrin, Deltamethrin, Silafluofen), Insektizide (wie Imidacloprid, Flufenoxuron, Chlorpyrifos, Fenoxycarb).

Die Borverbindungen werden zweckmäßig in einer Menge von 0,1 to 300 Gew.-teile auf 100 Gew.-teile der

Gesamtmenge von Polysiloxan und/oder Silan verwendet.

Die Borverbindungen stoppen mikrobielle Zersetzung und erlauben eine Abwehr von Insekten wie Termiten. Zweckmäßige Borverbindungen schließen ein Borsäure, Borax, Borester, wie Trialkylborat, z.B. Trimethylborat, Triethylborat, Tripropylborat und Tributylborat, Borate wie $Na_2B_8O_{13}$ x $4H_2O$ oder Tim-bor(R) erhältlich von U.S. Borax Inc., Borax und Borate wie Tim-bor(R) sind bevorzugt. Eine Menge der Borverbindungen von mehr als 300 Gew.-teile verschlechtert die Stabilität der Emulsionen. Wenn die Borverbindungen verwendet werden, setzt man sie vorzugsweise in einer Konzentration mindestens 10 Gew.% bezogen auf die Gesamtmenge der Polyorganosiloxane und Silane ein.

Weitere Hilfsmittel, die in den erfindungsgemäßen Zusammensetzungen verwendet werden können schließen beispielsweise ein: Emulgatoren, wie vorstehend erwähnt, Verdickungsmittel, Pigmente, Farbstoffe, antistatische Mittel, Entschäumer, Flammschutzmittel etc.

Bevorzugte erfindungsgemäße Zusammensetzungen enthalten ≥ 5 Gew.-%, bevorzugter ≥ 10 Gew.-%, noch bevorzugter ≥ 15 Gew.-%, am meisten bevorzugt ≥ 30 Gew.-% funktionalisiertes Polysiloxan und/oder funktionalisiertes Silan, wie zuvor definiert.

Bevorzugte erfindungsgemäße Zusammensetzungen enthalten:

5 bis 50, bevorzugter 15 bis 50 Gew.-Teile funktionalisiertes Polyorganosiloxan und/oder funktionalisiertes Silan, wie zuvor definiert,

30 bis 95, bevorzugter 40 bis 80 Gew.-Teile Lösungsmittel, wie beispielsweise die vorstehend erwähnten, wie zuvor definiert,

0 bis 100, bevorzugter 0 bis 80 Gew.-Teile weitere Biozide, wie beispielsweise die vorstehend erwähnten,

0 bis 100, bevorzugter 1 bis 80 Gew.-Teile Gew.-Teile sonstige Hilfsmittel, wie beispielsweise die vorstehend erwähnten, wie insbesondere Emulgatoren.

Die vorliegende Anmeldung betrifft weiterhin ein Verfahren zur Behandlung lignocellulosischer Werkstoffe, umfassend die Behandlung des lignocellulosischen Werkstoffs mit mindestens einem Polysiloxan oder Silan, wie zuvor definiert, oder einer Zusammensetzung wie zuvor definiert durch Oberflächenbehandlung, Tauchbehandlung oder Vakuum- oder Druck-Imprägnierung.

Beim erfindungsgemäßen Verfahren kann man den lignocellulosischen Werkstoffe mit allen bei der Holzbehandlung üblichen, aus der Fachliteratur bekannten Methoden zur Einbringung von wässrigen Lösungen mit dem erfindungsgemäßen Mittel beschichten oder imprägnieren, wie zum Beispiel durch Streichen, Spritzen, Tauchen, Fluten, Trogtränkung, Kesseldrucktränkung, Vakuumtränkung, Vakuumdrucktränkung, Bohrlochtränkung oder durch das Saftverdrängungsverfahren, vgl. auch "Holzlexikon von A-Z" (Bände I und II), Ulf Lohmann, DRW-Verlag, Leinfeld-Echterdingen, 2003, siehe u. a. "Einbringverfahren", Band I, Seiten 289 bis 292.

Bevorzugt führt man beim erfindungsgemäßen Verfahren eine Kesseldruckimprägnierung oder ein Oberflächenbehandlungsverfahren, wie Streichen, Spritzen, Tauchen oder Fluten, durch. Besonders bevorzugt führt man beim erfindungsgemäßen Verfahren eine Vakuum-Druck-Imprägnierung durch. So kann man das zu imprägnierende Substrat in einem druckfesten Imprägnierreaktor über 5 Minuten bis 8 Stunden, vorzugsweise 15 Minuten bis 2 Stunden, insbesondere etwa eine halbe bis eine Stunde, zunächst einem Druck von 10 bis 500 mbar abs., vorzugsweise 50 bis 200 mbar abs., insbesondere etwa 100 mbar abs., aussetzen, diesen Druck aufrechterhalten und das Substrat dann in das Imprägniermittel eintauchen bzw. mit dem Imprägniermittel bedecken, und den Druck für 0,5 bis 4 Stunden auf 1,5 bis 20 bar abs., vorzugsweise für 1 bis 3 Stunden auf 5 bis 15 bar abs., insbesondere etwa für 2 bis 3 Stunden auf 10 bis 12 bar abs., anheben. Anschließend kann der Druck auf Umgebungsdruck abgesenkt werden. Man entnimmt das Substrat der Imprägnierlösung, lässt gegebenenfalls Nachvakuum einwirken bzw. lässt abtropfen und führt das so vakuumdruckgetränkte Substrat der Trocknung zu. Vorteilhaft führt man nach dem Imprägnierschritt ein gezieltes Trocknungsverfahren durch. So sollte beim Imprägnierschritt eine gezielte Lufttrocknung und/oder ein gezieltes technisches Trocknungsverfahren folgen, beispielsweise eine Mikrowellentrocknung, IR-Trocknung, Frisch/Ablufttrocknung, Heißlufttrocknung, Vakuumtrocknung, Gefriertrocknung oder eine Kombination der Methoden, wie sie beispielsweise aus "Holzlexikon von A-Z" (Bände I und II), Ulf Lohmann, DRW-Verlag, Leinfelden-Echterdingen, 2003, siehe u. a. "Holztrocknung", Band I, Seite 605, zu entnehmen sind.

Die Kombination der erfindungsgemäß verwendeten Polyorganosiloxane oder Silane mit Kupfer- und/oder Borverbindungen und/oder organischen bioziden Schutzmitteln kann sowohl in einem bevorzugten einstufigen Verfahren als auch in einem weniger bevorzugten zweistufigen Verfahren eingesetzt werden. Einstufige Verfahren sind beispielsweise Streichen, Tauchen oder Imprägnieren mit Formulierungen der erfindungsgemäß verwendeten Polyorganosiloxane oder Silane in organischen Lösemitteln oder als wässrige Emulsion. Bei zweistufigen Verfahren werden vorzugsweise zuerst die Kupfer- und/oder Borverbindungen und/oder organischen bioziden Schutzmittel aufgebracht, beispielsweise durch Streichen, Tauchen oder Imprägnieren, und anschliessend die erfindungsgemäß verwendeten Polyorganosiloxane oder Silane.

In einer bevorzugten Ausführungsform liegen die erfindungsgemäß verwendeten Polyorganosiloxane oder

Silane als wässrige Emulsion vor. Zur Herstellung und/oder Stabilisierung einer solchen wässrigen Emulsion kann ein Emulgator zugesetzt werden, wobei der Emulgator auch ein aminomodifiziertes Silikon sein kann.

Es wird angenommen, dass der Mechanismus, durch welchen die erfindungsgemäß verwendeten Polyorganosiloxane oder Silane Holz und andere lignocellulosische Werkstoffe gegen die Witterung und/oder Schwankungen im Feuchtigkeitsgehalt widerstandsfähiger macht, zumindest teilweise darin liegt, dass die Oberfläche, vorzugsweise die an die Oberfläche angrenzenden Schichten bis hin zum gesamten Volumen des Holzes oder lignocellulosischen Werkstoffs hydrophobiert werden. Für Holz wird angenommen, dass die erfindungsgemäß verwendeten Polyorganosiloxane oder Silane zu einer verringerten Aufnahme von flüssigem Wasser und zu einer verringerten Feuchtesorption (gasförmiges Wasser) führt, was wiederum zu einer geringeren Schwankung der Dimensionen bei Regen bzw. bei sich verändernder Umgebungsfeuchte führt. So führen die erfindungsgemäß verwendeten Polyorganosiloxane oder Silane deshalb zu einer besseren Dimensionsstabilität von Holz, weil sie in die Zellwand des Holzes eindringen und dort offenbar aufgrund ihrer besonderen Funktionalisierungen dauerhaft verbleiben. Dadurch befindet sich die hölzerne Zellwand auch im trocknen Zustand in einer Form, die einem vorgequollenen Zustand ähnelt und nimmt deshalb weniger Wasser auf, als unbehandeltes Holz. Das Eindringen der erfindungsgemäß verwendeten Polyorganosiloxane oder Silane wird vor allem mit sogenannten Mikroemulsionen, beispielsweise mit durchschnittlich Partikelgrössen von 10 bis 100 nm erreicht. Derartige Mikroemulsionen können in die Poren von Holzzellwänden eindringen und auch zwischen Cellulosestränge, sodass die weitere Aufnahme von Wasser dauerhaft vermindert wird. Auf diese Weise wird auch die Dimensionsveränderung, beispielsweise die Schwindung beim Trocknen von Holz vermindert, wenn sich der Feuchtigkeitsgehalt der Umgebung verringert. Im Falle von Makroemulsionen, beispielsweise mit einer Partikelgrösse von grösser als 50 bis 100 nm wird angenommen, dass die erfindungsgemäß verwendeten Polyorganosiloxane oder Silane die inneren Oberflächen von Holzzellen zumindest teilweise beschichten und in die Poren der Holzzellwand eindringen. Die erfindungsgemäß verwendeten Polyorganosiloxane oder Silane ermöglichen einerseits eine bessere Assoziation mit dem lignocellulosischen Werkstoff und verleihen andererseits eine wachstumshemmende Wirkung für Mikroorganismen. Die Behandlung wirkt insbesondere gegenüber Pilzen hemmend, sodass mit den erfindungsgemäß verwendeten Polyorganosiloxanen oder Silanen behandelte lignocellulosische Werkstoffe, wie beispielsweise Holz, weniger stark von verfärbenden, beispielsweise verblauenden Pilzen oder Schimmel, oder zerstörenden Pilzen (Weissfäule, Braunfäule) befallen werden und daher eine grössere Beständigkeit gegen mikrobiellen Abbau aufweisen. Es wird angenommen, dass die Imprägnierung mit den erfindungsgemäß verwendeten Polyorganosiloxanen oder Silanen den Feuchtegehalt im Holz unter das zum Wachstum der Pilze benötigte Niveau drückt. Mittels der erfindungsgemäßen Polyorganosiloxane oder Silane gelingt überraschend in einem einstufigen, praxistauglichen Verfahren Holz dauerhaft zu imprägnieren, und dabei die Neigung des Holzes zur Wasseraufnahme weiter zu verringern, die Dimensionsstabilität bei Änderung des Feuchtegehalts der Umgebung zu verbessern und den Abbau des Holzes durch Pilze, Bakterien und Insekten, wie holzzerstörende Insekten, beispielsweise Termiten, Hausbockkäfer, gewöhnliche Nagekäfer, Splintholzkäfer wirksam zu verringern. Gleichzeitig wird die Vergilbung und Vergrauung des Holzes durch Licht- und Wettereinwirkung unterdrückt.

In einer weiteren besonders bevorzugten Ausführungsform der vorliegenden Erfindung werden die funktionalisierten Polyorganosiloxane oder Silane vermittels eines Verfahrens unter Verwendung vom überkritischem Kohlendioxid oder anderen vorzugsweise gasförmigen Lösungsmitteln (wie die vorstehend erwähnten) als Trägermedium in den lignocellulosischen Werkstoff eingebracht.

Im Falle der dabei besonders bevorzugten Verwendung von Kohlendioxid umfasst dieses Verfahren eine Druckbeaufschlagung von beispielsweise etwa 10 bis 400 bar bei etwa 0 bis 180°C, speziell 50 bis 300 bar bei 32 bis 100°C, ganz speziell 70 bis 300 bar bei 32 bis 70°C. Dieses Verfahren erfordert vielfach spezielle Dekompressionsverfahren um den lignocellulosischen Werkstoff beim Dekomprimieren nicht zu beschädigen. Beim Dekomprimieren entweicht das im allgemeinen gasförmige Trägermedium, wie insbesondere Kohlendioxid, und die erfindungsgemäß verwendeten Polysiloxane oder Silane bleiben im lignocellulosischen Werkstoff zurück, wobei im allgemeinen Zellwände und Zellzwischenräume mit den erfindungsgemäß verwendeten Polysiloxane oder Silane aufgefüllt werden. Für weitere Details zu überkritischen Fluid-Behandlungen von Holzwerkstoffen kann verwiesen werden auf DE 4202320, WO 2005/049170, EP 1128939, EP 1146969, EP 1501664 und Morrell & Levien: "Entwicklung Neuer Behandlungsverfahren zum Holzschutz" Konferenzbericht aus "Konferenz für Holzschutz in den 90er Jahren und darüber hinaus", Savannah, Goergia, USA, September 26-28,1994.

In einer weiteren besonders bevorzugten Ausführungsform der vorliegenden Erfindung werden alkoxy- und/oder acyloxy-, bevorzugt acetoxyfunktionalisierte Polysiloxane und/oder Silane vermittels eines Verfahrens unter Verwendung vom Carbonsäureanhydriden, speziell Essigsäureanhydrid, als Lösungsmittel und Reaktant in den lignocellulosischen Werkstoff eingebracht. Vorzugsweise wird hierzu das Holz in einem vakuum- und druckfesten Reaktor zunächst unter Vakuum gesetzt, anschließend wird eine Mischung enthaltend Essigsäureanhydrid und alkoxy- und/oder acetoxyfunktionalisiertes Polysiloxan oder Silan eingesaugt. Bei bevorzugt erhöhtem Druck und erhöhter Temperatur erfolgt die Holzimprägnierung über mehrere Stunden. Anschließend wird überschüssige Imprägnierflüssigkeit abgelassen. Durch Anlegen von Vakuum und ggf. Bedampfung werden flüchtige Verbindungen aus dem Holz entfernt. Es ist bevorzugt,

die alkoxy- und/oder acetoxyfunktionalisierten Polysiloxane und/oder Silane in einer Menge von 0.01 bis 20 Gew.-%, bevorzugt 0.1 bis 10 %, bevorzugter 0.1 bis 5 Gew.-% bezogen auf das Holzgewicht einzusetzen. Weitere technische Details zur Imprägnierung in Gegenwart von Essigsäureanhydrid können EP 680810 entnommen werden. Bei dieser Verfahrensweise beträgt das Gewichtsverhältnis von alkoxy- und/oder acetoxyfunktionalisierten Polysiloxanen und/oder Silanen zu den Carbonsäureanhydriden, speziell Essigsäureanhydrid, bevorzugt 0,1 : 100 bis 20 : 100, bevorzugter 1 : 100 bis 10 : 100.

Die bei dieser Verfahrensweise verwendeten Alkoxy- und/oder Acyloxy-, speziell Acetoxypolysiloxane können dabei auch *in-situ* durch Verwendung von Polyorganosiloxanolen, wie insbesondere SiOH-terminierte Polyorganosiloxane, insbesondere Hydroxy-terminierte Polydimethylsiloxanen in Anwesenheit von Di, Tri oder Tetraalkoxysilanen und/oder Acetanhydrid und/oder Di, Tri oder Tetraacetoxysilanen erzeugt werden, so dass diese mit den Polyorganosiloxanolen unter Bildung u. a. von Alkoxy- und/oder Acetoxypolysiloxanen reagieren können. Generell lassen sich Polysiloxane mit über O an Si gebundene Acyloxy-Gruppen, wie die Acetoxygruppe in-situ aus den entsprechenden Polyorganosiloxanolen, wie insbesondere SiOH-terminierte Polyorgano¬siloxane, insbesondere Hydroxy-terminierte Polydimethylsiloxanen und den entsprechenden Anhydriden auch in situ herstellen.

Erfindungsgemäß ist es bevorzugt durch das Verfahren des Auftrags bzw. des Einbringens der erfindungsgemäß verwendeten Polyorganosiloxane oder Silane Gehalte von bis zu 20 Gew. %, bevorzugt bis zu 10 Gew.%, besonders bevorzugt bis zu 7 Gew.-%, ganz besonders 1 bis 7 Gew.%, speziell etwa 2 bis 5 Gew.-% der Polyorganosiloxane oder Silane bezogen auf die Gesamtmasse des behandelten getrockneten lignocellulosischen Werkstoff zu erzeugen.

Mittels der erfindungsgemäß verwendeten Polyorganosiloxane oder Silane gelingt es mit einem besonders niedrigen Gehalt derselben eine maximale Schutzwirkung für den lignocellulosischen Werkstoff zu erzielen.

Erfindungsgemäß kann der Gehalt der erfindungsgemäß verwendeten Polyorganosiloxane oder Silane in den lignocellulosischen Werkstoffen dadurch erhöht werden, dass man besonders konzentrierte wässrige Emulsionen der Polyorganosiloxane oder Silane verwendet. Bevorzugte Konzentrationen genannter wässriger Emulsionen liegen daher bei mindestens etwa 5, bevorzugt mindestens etwa 10, noch bevorzugter mindestens etwa 15 Gew.-% bezogen auf die Gesamtmenge der Emulsion. Alternativ können auch Lösungen der Polyorganosiloxane oder Silane verwendet werden, wobei die bevorzugten Konzentrationen denen der Emulsion entsprechen.

Die Verwendung der Mikroemulsionen (durchschnittliche Tröpfchendurchmesser der Polyorganosiloxane oder Silane kleiner als 200 nm) ist besonders bevorzugt, weil die Aufnahme in den lignocellulosischen Werkstoff besonders leicht erfolgt. Erfindungsgemäß wurde gefunden, dass die Eindringtiefe und damit die Wirksamkeit der erfindungsgemäßen funktionalisierten Polyorganosiloxane oder Silane auch vom Molekulargewicht und der Benetzbarkeit des lignocellulosischen Werkstoffs mit den genannten funktionalisierten Polyorganosiloxane oder Silane abhängt. Es zeigt sich, dass besonders die erfindungsgemäßen kurzkettigen bzw. niedermolekularen Polyorganosiloxane oder Silane, die erfindungsgemäß verwendet werden hier bevorzugt sind. Die erfindungsgemäß verwendeten Polyorganosiloxane weisen beispielsweise zahlenmittlere Molekulargewichte $M_n$ von weniger als 3000 g/mol bevorzugt weniger als 2000 g/mol, noch bevorzugter weniger als 1000 g/mol auf (jeweils bestimmt durch Gelpermeationschromatographie an Polystyrol als Standard). Die erfindungsgemäßen Silane sind per se niedermolekulare Verbindungen und weisen ein Molgewicht von im Allgemeinen weniger als 500 g/mol noch bevorzugter weniger als 400 g/mol, noch bevorzugter weniger als 300 g/mol auf.

## Beispiele

### Beispiel 1:

Prüfkörper der Größe 25*25*10 $mm^3$ (radial*tangential*longitudinal) der Holzarten Kiefersplint (*Pinus sylvestris* L.) und Buche (*Fagus sylvatica* L.) wurden bei 103 °C bis zur Massekonstanz darrgetrocknet. Anschließend erfolgte eine Vakuumtränkung mit einer wässrigen Emulsion mit 10 Gew.-% eines analog DE 10036532 Beispiel 1 hergestellten sarcosinfunktionalisierten Silicons der Kettenlänge D10 (10 D-Einheiten) und der Struktur

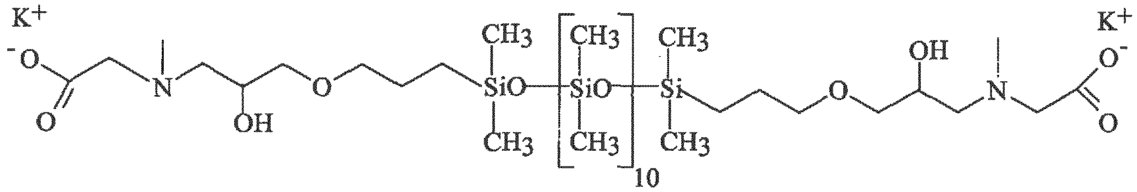

Es erfolgte eine Darrtrocknung über 4 Tage bei steigenden Temperaturen bis zu 103 °C. Danach wurde eine Auswaschung gemäß EN 84 durchgeführt, um extrahierbare Siloxane und andere Materialien abzutrennen.

Dabei handelt es sich um eine 14-tägige Lagerung in Wasser mit mehrfachem Wasserwechsel. Es ergab sich eine prozentuale Gewichtszunahme von durchschnittlich ca. 9 % bezogen auf das Ausgangsgewicht des jeweiligen getrockneten nicht-behandelten Holzes.

Zur Bestimmung der Wasseraufnahme beschwerte man die Proben mit Gittern und übergoß sie mit ca. 300 ml Wasser. Aus der Gewichtszunahme nach 2, 4, 6 und 24 Stunden errechnete man die Wasseraufnahme in %. Der Wassergehalt wurde jeweils auf das Anfangsgewicht der (noch) unbehandelten Prüfkörper bezogen, um einen Einfluss der Gewichtszunahme durch die Behandlung auszuschließen.

$$\text{Wasseraufnahme} = \frac{w_{nass} - w_{trbeh}}{w_{trunbeh}} * 100\ [\%]$$

$w_{nass}$: Gewicht der nassen Prüfkörper
$w_{trbeh}$: Gewicht der trockenen Prüfkörper nach Behandlung
$w_{trunbeh}$: Gewicht der trockenen Prüfkörper vor Behandlung

Es zeigte sich, dass die mit dem zwitterionisch-funktionellen Siloxan behandelten Holzproben nach 24 Stunden gegenüber der jeweiligen unbehandelten Referenz eine um ca. 36 Gew-% verminderte Wasseraufnahme zeigten.

**Beispiel 2:**

Prüfkörper der Größe 25*25*10 $mm^3$ (radial*tangential*longitudinal) der Holzarten Kiefersplint (*Pinus sylvestris* L.) und Buche (*Fagus sylvatica* L.) wurden bei 103 °C bis zur Massekonstanz darrgetrocknet. Anschließend erfolgte eine Vakuumtränkung mit einer Lösung von 30 Gew.-% Propyltriacetoxysilan in Essigsäure, die zusätzlich 0,07 Gew.% $H_2SO_4$ enthielt.

Zur Vakuumtränkung wurden die Prüfkörper über 15 min in einem Vakuumgefäß einem Unterdruck von 7 mbar ausgesetzt. Anschließend wurde die Imprägnierlösung zugedüst und der Normaldruck wieder hergestellt (Tränkung gemäß EN 113).

Die Prüfkörper wurden in der Lösung für 5 Stunden auf 120 °C mit Rückflusskühler und unter Ausschluss von Feuchtigkeit ($CaCl_2$ Röhrchen) erhitzt. Die Prüfkörper wurden anschließend im Soxhlet-Extraktor mit Essigsäure extrahiert, um lösliches Silan bzw. Siloxan sowie mit Ethanol extrahiert, um die Essigsäure zu entfernen. Die Prüfkörper wurden dann bei 103 °C bis zur Massekonstanz getrocknet. Anschließend erfolgte eine Tauchung in Wasser wie in Beispiel 1 beschrieben. Die Prüfkörper zeigten gegenüber den unbehandelten Holzproben (Kontrolle) eine stark verlangsamte Wasseraufnahme auf. Nach 24 Stunden fiel diese gegenüber der Kontrolle um ca. 25 % geringer aus. Zusätzlich beobachtete man eine bleibende Quellung der Zellwand. Die Querschnittsfläche war um 7 % vergrößert (Bulking).

Das Bulking konnte auch durch Auswaschung mit Wasser nicht rückgängig gemacht werden. Die durchschnittliche Gewichtszunahme im darrtrockenen Zustand betrug ca. 14 Gew.-% bezogen auf die Ausgangsgewichte der 10 Proben. Die Quell-Schwindvergütung (ASE=Anti Shrink Efficiency) wurde nach folgender Formel berechnet:

$$ASE = \alpha_u - \alpha_t / \alpha_u * 100\ [\%]$$

$\alpha_u$ = Quellungskoefizient der Kontrollen
$\alpha_t$ = Quellungskoefizient der behandelten Proben

$$ASE = \frac{\overline{\alpha}_u - \alpha_t}{\overline{\alpha}_u} \times 100\ [\%]$$

$\overline{\alpha_u}$ = Quellungskoeffizient der Kontrollen
$\overline{\alpha_t}$ = Quellungskoeffizient der behandelten Proben.

Wobei die Quellungskoeffizienten gemäß der folgenden Formel errechnet wurden:

$$\text{Quellungskoeffizient } \alpha = A_{trocken}\text{-}A_{nass} / A_{trocken} \text{ *100 [\%]}$$

$$\text{Quellungskoeffizient } \alpha = \frac{A_{trocken} - A_{nass}}{A_{trocken}} \text{ x100 [\%]}$$

$A_{trocken}$ = Querschnittsfläche trocken
$A_{nass}$= Querschnittsfläche nass

Die erreichte Quell-Schwindvergütung (ASE) lag bei durchschnittlich etwa 50 % im Vergleich zur unbehandelten Referenz.

**Beispiel 3:**

Prüfkörper der Größe 25*25*10 $mm^3$ (radial*tangential*longitudinal) der Holzarten Kiefersplint (*Pinus sylvestris* L.) und Buche (*Fagus sylvatica* L.) wurden bei 103 °C bis zur Massekonstanz darrgetrocknet. Anschließend erfolgte eine Vakuumtränkung (wie in Beispiel 2 beschrieben) mit 100 %-igem Propyltriacetoxysilan. Die in dieser Weise getränkten Prüfkörper wurden für 5 Stunden bei 90 °C in Propyltriacetoxysilan erhitzt, der Propyltriacetoxysilan -Lösung entnommen und für 24 Stunden bei Raumklima 25 °C und 50 % Luftfeuchte gelagert. Es folgte eine Darrtrocknung bei 103 °C bis zur Massekonstanz und anschließende vollständigen Tauchung in Wasser bei 25 °C. Diese wurde wie in Beispiel 1 beschrieben durchgeführt. Die Gewichtszunahme nach erneuter Darrtrocknung betrug durchschnittlich ca. 68 Gew.-% bezogen auf die Ausgangsgewichte der 10 Prüfkörper. Es zeigte sich eine gegenüber unbehandelten Holzprüfkörpern stark verringerte Wasseraufnahme; nach 24 Stunden war diese um durchschnittlich 70 Gew:-% vermindert.

**Beispiel 4: Referenzbeispiel ohne Siloxan** (**"Acetyliertes Holz"**)

8 Kiefernsplintproben (20*20*10$mm^3$; radial*tangential*longitudinal) wurden bei 103 °C darrgetrocknet und anschließend gemäß EN 113 mit Essigsäureanhydrid getränkt. Die Proben wurden dann in der Chemikalie liegend auf 120 °C aufgeheizt und diese Temperatur für 5 Stunden beibehalten. Nach der Reaktionszeit wurden die Proben in deionisiertes Wasser gebracht, um die Reaktion zu beenden und das überschüssige Essigsäureanhydrid zu entfernen. Die Proben wurden für 2 Tage im Wasser gelassen, nach einem Tag wurde das Wasser gewechselt. Anschließend wurden die Proben erst bei Raumtemperatur und nachher bei 103 °C getrocknet.

An den darrgetrockneten Proben wurde anschließend die Wasseraufnahme getestet, indem die Proben in einem Gefäß beschwert wurden und ca. 300ml Wasser zugegossen wurden. Nach 2, 4, 6 und 24 Stunden wurde das Gewicht nach kurzem Abtupfen bestimmt und die Proben zügig zurück in das Gefäß gegeben. Die relative Wasseraufnahme wurde auf Grundlage des Trockengewichts der Proben vor der Acetylierung berechnet. Dann wurde eine Wasseraufnahmeverminderung nach 24 Stunden berechnet, indem die Verminderung der Wasseraufnahme nach 24 Stunden gegenüber der Kontrolle auf den Wert der Kontrolle bezogen wurde. Diese Verminderung betrug bei der ersten Wasseraufnahme -12,8 % und erhöhte sich auf -34,9 % in der 4. Wasseraufnahme.

**Beispiel 5: Synthese eines acetoxyfunktionellen Polydimethylsiloxans**

234 g Ethyltriacetoxysilan (1 Mol) werden in einem Rundkolben vorgelegt und 231 g (0,5 Mol) eines SiOH gestoppten Polydimethylsiloxans der mittleren Struktur

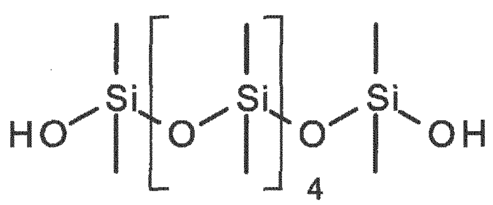

mit einer Kettenlängenverteilung von 2 bis 10 und restlichen Cyclodimethylsiloxanen zugetropft. Während des Zutropfens stieg die Temperatur von 20 °C auf ca. 38 °C. Nach 5 Stunden Reaktion wurde das Produkt mittels $^1$H-NMR

untersucht und festgestellt, dass kein freies Ethyltriacetoxysilan mehr vorliegt.

Das Produkt hat folgende mittlere Struktur:

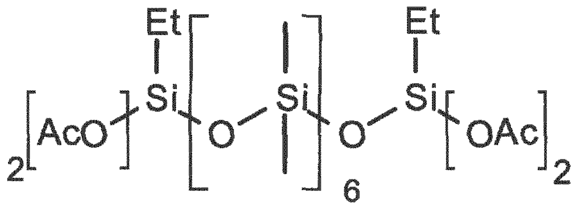

**Beispiel 6: Imprägnierung mit Essigsäureanhydrid und Acetoxyfunktionellem Polysiloxan-Gemisch gemäß Beispiel 5.**

Jeweils 16 Kiefernsplintproben (20*20*10 $mm^3$; radial*tangential*longitudinal) wurden bei 103 °C darrgetrocknet und anschließend gemäß EN 113 mit Essigsäureanhydrid gemischt mit verschiedenen Mengen an acetoxyfunktionellem Polysiloxan (0 %, 1 %, 3 %, 6 %, 10 %, 20 Gew.-%) getränkt. Die Proben wurden dann in der Chemikalie liegend auf 120 °C aufgeheizt und diese Temperatur für 5 Stunden beibehalten. Nach der Reaktionszeit werden die Proben in deionisiertes Wasser gebracht, um die Reaktion zu beenden und die überschüssige Chemikalie zu entfernen. Die Proben wurden für 2 Tage im Wasser gelassen, nach einem Tag wurde das Wasser gewechselt. Anschließend wurden die Proben erst bei Raumtemperatur und nachher bei 103 °C getrocknet.

Wie aus der Grafik ersichtlich, steigt das Weight Percent Gain (WPG), also die prozentuelle Gewichtszunahme, durch die Behandlung mit steigendem Gehalt an acetoxyfunktionellem Siloxan stark an. Das WPG wurde nach folgender Formel anhand der Trockengewichte ermittelt:

$$WPG\ [\%] = \left[\frac{Gewicht_{nach\ Behandlung}}{Gewicht_{vor\ Behandlung}} - 1\right] * 100$$

Aber auch das Bulking, die dauerhafte Quellung im trockenen Zustand durch die Behandlung, steigt an. Bei reiner Acetylierung (0 % Siloxan) liegt es bei 7,9 % und steigt bei 20 %iger Zumischung von Siloxan auf 8,7 % signifikant an. Das Bulking wurde nach folgender Formel anhand der Trockendimensionen ermittelt:

$$bulking\ [\%] = \left[\frac{rad_{nach\ Behandlung} * tan_{nach\ Behandlung}}{rad_{vor\ Behandlung} * tan_{vor\ Behandlung}} - 1\right] * 100$$

An den Proben wurde die Wasseraufnahme bestimmt, indem jeweils 8 Prüfkörper einer Behandlung in ein Gefäß gebracht, beschwert und mit ca. 300 ml Wasser übergossen wurden. Nach 2, 4, 6 und 24 Stunden wurde das Gewicht der Proben bestimmt und die relative Wasseraufnahme auf Grundlage des Trockengewichts der Proben vor der Acetylierung berechnet. Auf Grundlage der 24 Stunden Werte wurde eine Wasseraufnahmeverminderung (Vermind. WA) gegenüber den Kontrollen und den acetylierten Proben berechnet. Hierzu wurde die Verminderung der relativen Wasseraufnahme in Prozentpunkten auf die relative Wasseraufnahme der Kontrollen bzw. der acetylierten Proben bezogen. Im ersten Wasserkontakt war die Wasseraufnahme der Kombinationen mit Polysiloxan gegenüber den rein acetylierten Proben deutlich vermindert. Allerdings wurde die maximale Verminderung der Wasseraufnahme erst bei einer Zumischung von 6 % Polysiloxan erreicht. In der 4-ten Wasseraufnahme waren kaum noch Unterschiede zwischen den einzelnen Kombinationen mit Polysiloxan erkennbar. Dies bedeutet, dass bereits eine Zumischung von 1 % acetoxyfunktionellem Polysiloxan eine maximale Verminderung der Wasseraufnahme bewirken kann. Gegenüber der reinen Acetylierung zeigt die Kombination mit Polysiloxan eine deutlich bessere Hydrophobierung.

**Abbildung: Verminderung der Wasseraufnahme im Vergleich zu nicht acetyliertem Holz (schwarze Balken) und acetyliertem Holz (schraffierte Balken (Oben: 1. Wasseraufnahme, unten: 2. Wasseraufnahme).**

**Beispiel 7 (Referenz):**

Kiefernsplintholzproben 20*20*10 $mm^3$ (radial*tangential*longitudinal) wurden mit einer wässrigen Emulsion getränkt, bestehend aus 10 Gew.-% (m/m) aminofunktionellem Polysiloxan mit einer mittleren Kettenlänge von 12 Siloxy-

Einheiten der Formel:

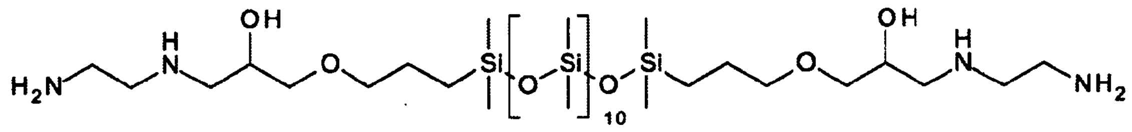

3 Gew.-% Essigsäure, 5 Gew.-% Emulgatoren aus einer Mischung von drei Emulgatoren (Isotridecyl-Alkohol C13-Polyethylenoxid mit verschiedenen Polyethylenoxid-Kettenlängen wie z.B. Imbentin®) und 82 % Wasser. Das aminofunktionelle Polysiloxan wurde analog zu Beispiel 22a in DE 4318536 durch Reaktion von epoxyfunktionellem Siloxan mit Ethylendiamin hergestellt.

Es wurde anschließend eine Bestimmung der Wasseraufnahme, analog zu der in Beispiel 6 beschriebenen, durchgeführt. Die Verminderung der Wasseraufnahme nach 24 Stunden betrug bei der ersten Wasseraufnahme lediglich -8,2 %, dies ist wahrscheinlich bedingt durch den hohen Emulgatorgehalt, der eine Wasseraufnahme begünstigte. Bei der zweiten Wasseraufnahme betrug die Verminderung -18,6 %.

Im Pilztest, wie nachstehend beschrieben, zeigten die mit diesem Material behandelten Proben einen Masseverlust bei Inkubation mit *Coniophora puteana* von 9,7 % (Kiefer) und 26,9 % (Buche), sowie bei der Inkubation mit *Trametes versicolor* von 6,3 % (Buche). Die Werte der Kontrollen sind in nachstehender Tabelle aufgeführt.

**Beispiel 8**

Kiefernsplintholzproben 20*20*10 $mm^3$ (radial*tangential*longitudinal) wurden mit einer wässrigen Emulsion getränkt, bestehend aus 10 Gew.-% (m/m) carboxyfunktionellem Polysiloxan einer mittleren Kettenlänge 12 der Formel

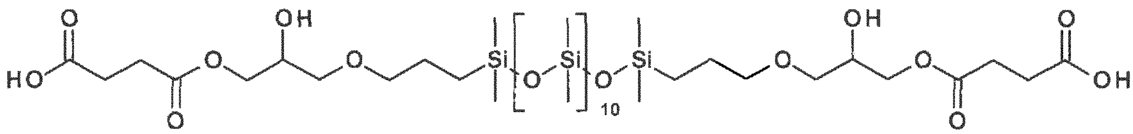

10 Gew.-% Emulgatoren (wie in Beispiel 7) und 80 % Wasser.

Es wurde anschließend eine Wasseraufnahme, analog zu der in Beispiel 6 beschriebenen, durchgeführt. Die Verminderung der Wasseraufnahme nach 24 Stunden betrug bei der ersten Wasseraufnahme -11,2 %, in der zweiten Wasseraufnahme kam es gegenüber der Kontrolle zu einer Erhöhung der Wasseraufnahme um +4,7 %.

Im Pilztest, welcher nachstehend erwähnt wird, zeigten die mit diesem Material behandelten Proben einen Masseverlust bei Inkubation mit *Coniophora puteana* von 2,7 % (Kiefer) und 14,1 % (Buche), sowie bei Inkubation mit *Trametes versicolor* von 2,8 % (Buche). Die Werte der Kontrollen sind in nachstehender Tabelle aufgeführt.

**Beispiel 9:**

Kiefernsplintholzproben 20*20*10 $mm^3$ (radial*tangential*longitudinal) wurden mit einer wässrigen Emulsion getränkt, bestehend aus 10 Gew.-% (m/m) einer Mischung des in Beispiel 7 beschriebenen aminofunktionellem Polysiloxan (80 Gew.-%) mit dem in Beispiel 8 beschriebenen carboxyfunktionellen Polysiloxan (20 Gew.-%), 3 % Essigsäure, 5 % Emulgatoren und 82 % Wasser.

Es wurde anschließend eine Wasseraufnahme, analog zu der in Beispiel 6 beschriebenen, durchgeführt. Die Verminderung der Wasseraufnahme nach 24 Stunden betrug bei der ersten Wasseraufnahme -16,5 % und erhöhte sich bei der zweiten Wasseraufnahme auf -23,8 %. Durch eine Kombination der beiden funktionellen Polysiloxane ist folglich eine Verbesserung der Hydrophobierung des behandelten Holzes gegenüber beiden reinen Produkten zu erreichen. Dies ist vor allen Dingen vor dem Hintergrund interessant, dass das carboxyfunktionelle Polysiloxan eine sehr gute Wirkung gegenüber holzzerstörenden Pilzen zeigt, jedoch die Wasseraufnahme erhöht und starker Auswaschung unterliegt. Durch eine Kombination mit aminofunktionellem Polysiloxan kann die Auswaschung und die Hydrophobierung verbessert werden. Mischung von aminofunktionellem Polysiloxan zu carboxyfunktionellem Polysiloxan von 50:50 und 20:80 zeigten in der ersten Wasseraufnahme z.T. bessere Ergebnisse, in der 2. Wasseraufnahme war die Kombination 80:20 den anderen allerdings überlegen.

**Pilztest**

Es wurde ein Pilztest gemäß EN 113 durchgeführt, bei dem abweichend von der Norm jeweils 2 behandelte, bzw. 2 unbehandelte Proben in einer Kolleschale inkubiert wurden. Die nachstehende Tabelle zeigt die Ergebnisse.

| **Beispiel** | | **Kontrolle** | **7 (Ref.)** | **8** | **9** | **1** |
|---|---|---|---|---|---|---|
| Funktionalisierung | | - (unbehandelt) | Amino | Carboxy | Amino/ Carboxy | Carbobetain |
| Wasser-aufnahme [%] | 1. | | -8,2 | -11,2 | -16,5 | -36 |
| | 2. | | -18,6 | +4,7 | -23,8 | -21,9 |
| Pilzresistenz (Masseverlust [%]) | *Coniophor a puteana* auf Kiefer | 45,2 | 9,7 | 2,7 | 5 | 52,4 |
| | *Coniophor a puteana* auf Buche | 42,6 | 26,9 | 14,1 | 5 | 49,3 |
| | *Trametes versicolor* auf Buche | 20,8 | 6,3 | 2,8 | 5 | 26,6 |
| )5: wird nachgeliefert | | | | | | |

Die Beispiele machen deutlich, dass die erfindungsgemäßen funktionalisierten Polysiloxane bzw. Silane die Wasseraufnahme in Holzkörpern absenken. Die verringerte Wasseraufnahme ermöglicht es, die erfindungsgemäßen funktionalisierten Polysiloxane bzw. Silane als Schutzmittel für Holz und andere lignocellulosische Werkstoffe einzusetzen, wobei Holz u.ä. gegenüber Witterungseinflüssen wie beispielsweise Veränderungen im Feuchtigkeitsgehalt der Umgebung, widerstandsfähiger gemacht werden kann.

Es ist auch gezeigt worden, dass Holz, das mit erfindungsgemäßen funktionalisierten Polysiloxanen bzw. Silanen als Schutzmittel behandelt worden ist, einem deutlich geringeren Befall durch oberflächlichen Schimmel- und Bläuepilze unterliegt.

Als weiteren Vorteil bieten die erfindungsgemäßen funktionalisierten Polysiloxane bzw. Silane als Schutzmittel für lignocellulosische Materialien, beispielsweise Holz, eine erhöhte Widerstandsfähigkeit gegen den Befall mit Algen und schädlichen Meeresorganismen, wie beispielsweise Bohrmuscheln. Als weiteren Vorteil bieten die erfindungsgemäßen funktionalisierten Polysiloxane bzw. Silane als Schutzmittel für Holz eine erhöhte Widerstandsfähigkeit gegen den Befall mit Algen.

Des weiteren können die erfindungsgemäßen funktionalisierten Polysiloxane bzw. Silane die Widerstandsfähigkeit von Holz gegen holzzerstörende Insekten, beispielsweise Termiten, Hausbockkäfern, gewöhnlichen Nagekäfern, Splintholzkäfern erhöhen.

Des Weiteren zeigen Abbauversuche, d.h. der gemessene Masseverlust an Buche und Kiefer im Kontakt mit dem Weissfäulepilz Trametes versicolor bzw. dem Braunfäulepilz Coniophora puteana, dass die erfindungsgemäßen funktionalisierten Polysiloxane bzw. Silane Holz und andere lignocellulosische Werkstoffe auch gegenüber diesen holzzerstörenden Pilzen widerstandsfähiger machen.

Versuche zum Quellungs- und Schwindungsverhalten von Buchen- und Fichtenholzproben zeigen, dass die erfindungsgemäßen funktionalisierten Polysiloxane bzw. Silane Holz eine erhöhte Dimensionsstabilität bei Kontakt mit Wasser oder Feuchtigkeitsschwankungen der Umgebung verleihen. Dies ist eine gewünschte Eigenschaft, da Quellung und Schwindung große Nachteile bei der Anwendung von Holz bedeuten. Beispielsweise führt dies Erhöhung der Dimensionsstabilität zu einer deutlich verringerten Rissbildung, wie in Bewitterungsversuchen gezeigt werden konnte.

Die Versuche zur Aussenbewitterung zeigten, dass Holzproben, die mit dem erfindungsgemäßen funktionalisierten Polysiloxane bzw. Silane behandelt wurden, eine erhöhte Farbstabilität aufweisen. Dieser Schutz ist darauf zurückzuführen, dass sich insbesondere der Ligninabbau in den oberen Zellwandschichten des Holzes weniger schnell als bei unbehandeltem Holz vollzieht.

Die Auswaschversuche mit Borsäure als Cobiozid zur Bestimmung der Fixierung hydrophiler Substanzen durch die erfindungsgemäßen funktionalisierten Polysiloxane bzw. Silane in lignocellulosischen Materialien zeigen, dass die erfindungsgemäßen funktionalisierten Polysiloxane bzw. Silane eine Fixierung bzw. Zurückhaltung hydrophiler Substanzen in Holz bzw. lignocellulosischen Materialien erreichen. Die Fixierung bzw. Zurückhaltung auch lipophiler Substanzen in lignocellulosischen Werkstoffen durch die erfindungsgemäßen funktionalisierten Polysiloxane bzw. Silane gehen auf die allgemein lipophilen Eigenschaften dieser Silikonderivate zurück. Daher eignen sich die erfindungsgemäßen funktionalisierten Polysiloxane bzw. Silane auch zur Fixierung herkömmlicher Holzbehandlungsmittel, wie beispielsweise Flammschutzmitteln, Fungiziden, Insektiziden oder Farbstoffen. Dies betrifft vor allem solche herkömmlichen Verbindungen, die nur schlecht in der Matrix des lignocellulosischen Materials zurückgehalten werden und durch Wasser leicht ausgewaschen werden.

Zum Nachweis einer Verringerung der Entflammbarkeit werden mit den erfindungsgemäßen funktionalisierten Polysiloxane bzw. Silane imprägniertes Kiefernholz mit Hilfe einer Thermo-Waage (TGA) untersucht. Dazu werden Kiefernholzproben der Größe 5 x 10 x 30 $mm^3$ mit erfindungsgemäßen funktionalisierten Polysiloxane bzw. Silane sowie mit einem kommerziellen Flammschutzmittel für Holz (Impralit F3/66, Rütgers Organics) behandelt. Die Holzproben werden anschließend gemahlen. Mittels einer Thermo-Waage (STA 409 PC, Netzsch) wird das Holzmehl kontinuierlich unter Sauerstoff als Schutzgas mit einer Aufheizgeschwindigkeit von 20 °C/min von 0 °C auf 800 °C erhitzt und die Gewichtsveränderungen nachvollzogen. Die thermogravimetrische Analyse zeigt, dass die erfindungsgemäßen funktionalisierten Polysiloxane bzw. Silane zu einer erhöhten Flammbeständigkeit bzw. Feuerfestigkeit der damit behandelten lignocellulosischen Werkstoffe, am Beispiel von Holz nachgewiesen, führen. Dies ist insbesondere dann der Fall, wenn zusätzlich zu den erfindungsgemäßen funktionalisierten Polysiloxane bzw. Silane herkömmliche Flammschutzmittel in den lignocellulosischen Werkstoff angebracht sind, wie beispielsweise solche aus Phosphorverbindungen (Phosphate, Polyphosphate), Magnesiumverbindungen (Magnesiumhydroxid), Aluminiumverbindungen (Aluminiumhydroxid), Brom-/Chlorverbindungen (Halogenwasserstoffe) und Flammschutzsysteme mit aufblähenden Stoffen.

Die erfindungsgemäßen funktionalisierten Polysiloxane bzw. Silane können auch zur physikalischen und/oder chemischen Bindung herkömmlicher Behandlungsmittel für Holz oder andere Werkstoffe auf Cellulosebasis dienen und so deren Beständigkeit erhöhen. Dies betrifft insbesondere die Kombination erfindungsgemässer funktionalisierten Polysiloxane bzw. Silane mit Flammschutzmitteln, Insektiziden oder Farbstoffen, vor allem solche Verbindungen, die bevorzugt in einem hydrophoben Milieu stabil sind oder dort zurückgehalten werden.

Überdies können mit erfindungsgemäßen funktionalisierten Polysiloxane bzw. Silane behandelte Hölzer belastbarere Oberflächen aufweisen, d.h. beispielsweise härtere und/oder abriebfestere Oberflächen.

**Patentansprüche**

1. Verwendung von Polyorganosiloxanen oder Silanen zur Behandlung von lignocellulosischen Werkstoffen, **dadurch gekennzeichnet, dass** die Polyorganosiloxane geradkettige, verzweigte oder cyclische Polyorganosiloxane sind, die im Zahlenmittel aus 2 bis 30 Siloxy-Einheiten aufgebaut sind, die aus der Gruppe ausgewählt werden, die besteht aus:

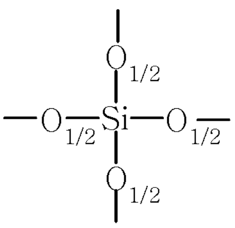
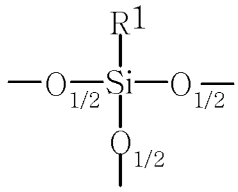
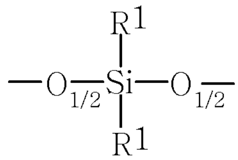
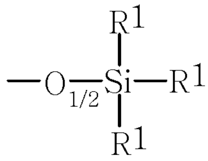

(Q) (T) (D) (M)

worin die Reste $R^1$ organische Reste darstellen, die gleich oder verschieden voneinander sein können, mit der Maßgabe, dass mindestens einer der Reste $R^1$ ein Rest $R^F$ ist, der eine funktionelle Gruppe F enthält, die ausgewählt wird aus der Gruppe der funktionellen Gruppen, die besteht aus:

- Zwitterionischen Gruppen,
- Carbonsäure/Carboxylat-Gruppen, und
- über O an Si gebundene Acyloxy-Gruppen,

und **dadurch gekennzeichnet, dass** die Silane die Formel (I)

$Si\text{-}(R^1)_4$ (I)

worin die Reste $R^1$ wie oben definiert ist, mit der Maßgabe, dass mindestens einer der Reste $R^1$ ein Rest $R^F$ ist, der eine funktionelle Gruppe F enthält, die wie oben definiert ist, und mindestens einer der Reste $R^1$ über ein Heteroatom an das Siliziumatom gebunden ist und mindestens einer der Reste $R^1$ über ein Kohlenstoffatom an das Siliziumatom gebunden ist,
oder die Formel (II)

$$(R^1)_3-Si-R^3-Si-(R^1)_3 \qquad (II)$$

aufweisen, worin $R^1$ gleich oder verschieden ist und wie für Formel (I) definiert ist und $R^3$ ein zweiwertiger, geradkettiger, verzweigter, cyclischer, aliphatischer, ungesättigter oder aromatischer Kohlenwasserstoffrest mit bis zu 30 Kohlenstoffatome ist, der eine oder mehrere Gruppen ausgewählt aus -O-, $-NR^4-$, worin $R^4$ Wasserstoff oder C1-C22-Alkyl ist, -C(O)- und -C(S)- enthalten kann, und gegebenenfalls durch Hydroxy substituiert sein kann und über Kohlenstoff an das Siliziumatom gebunden ist,
und deren Salze.

2. Verwendung der Polyorganosiloxane oder Silane nach Anspruch 1, **dadurch gekennzeichnet, dass** die Reste $R^1$ ausgewählt werden aus der Gruppe der Reste $R^F$ und $R^N$, wobei es sich bei den Resten $R^F$ um solche Reste $R^1$ handelt, die die genannten funktionellen Gruppen F aufweisen und bei den Resten $R^N$ um Reste $R^1$ handelt, die die genannten funktionellen Gruppen F nicht aufweisen.

3. Verwendung der Polyorganosiloxane nach Anspruch 1 oder 2,
**dadurch gekennzeichnet, dass** der molare Anteil der Reste $R^F$, die mindestens eine funktionelle Gruppe F enthalten, 3,33 bis 100 mol-% bezogen auf die Anzahl der Siloxyeinheiten beträgt.

4. Verwendung der Polyorganosiloxane nach einem der Ansprüche 1 bis 3, **dadurch gekennzeichnet, dass** der molare Anteil der verzweigenden Reste T und Q 0 bis 50 mol-% bezogen auf die Anzahl der Siloxyeinheiten beträgt.

5. Verwendung der Polyorganosiloxane nach einem der Ansprüche 1 bis 4, **dadurch gekennzeichnet, dass** die zahlenmittlere Anzahl der Siloxyeinheiten 2 bis 20 beträgt.

6. Verwendung der Polyorganosiloxane oder Silane nach einem der Ansprüche 1 bis 5, **dadurch gekennzeichnet, dass** die Substituenten $R^1$ aus der Gruppe ausgewählt werden, die besteht aus:

geradkettigen, cyclischen oder verzweigten, gesättigten, ungesättigten oder aromatischen Kohlenwasserstoffresten mit bis zu 100 Kohlenstoffatomen, die gegebenenfalls eine oder mehrere Gruppen, ausgewählt aus

-O-,

-S-,

$-NR^2-$,

worin $R^2$ Wasserstoff, einen einwertigen, geradkettigen, cyclischen oder verzweigten, gesättigten, ungesättigten oder aromatischen Kohlenwasserstoffrest mit bis zu 60 Kohlenstoffatomen darstellt, der eine oder mehrere Gruppen ausgewählt aus -O-, -S-, -NH-, -C(O)- und -C(S)- enthalten kann, und der gegebenenfalls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Amino, Alkylamino, Dialkylamino, Ammonium, Polyetherresten und Polyetheresterresten substituiert sein kann, wobei wenn mehrere Gruppen - $NR^2$ vorliegen, diese gleich oder verschieden sein können,

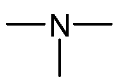

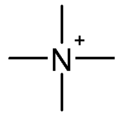

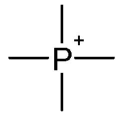

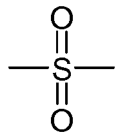

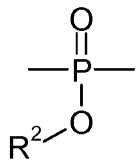

,

worin $R^2$ wie zuvor definiert ist,
$-P(R^2)_2$, worin $R^2$ wie zuvor definiert ist,
-C(O)- und
-C(S)- enthalten können,
und durch einen oder mehrere Reste substituiert sein kann, die ausgewählt sind aus der Gruppe, die besteht aus:

- Hydroxyl,
- Mercapto (-SH oder $-S^-$),
- Isocyanato,
- Halogen,
- einem Polyetherrest mit bis zu 60 Kohlenstoffatomen, der gegebenenfalls eine oder mehrere Amino-, Mono- oder Dialkylamino, oder Arylamino-Gruppen tragen kann,
- einem Saccharid-haltigem organischen Rest,

oder zwei Substituenten $R^1$ aus verschiedenen Siloxyeinheiten bilden gemeinsam einen geradkettigen, verzweigten oder cyclischen, gegebenenfalls durch

- O-, -S-, -C(O)-, -NH- unterbrochenen und gegebenenfalls durch OH substituierten Alkandiylrest mit 2 bis 20 Kohlenstoffatomen zwischen zwei Siliziumatomen,

wobei die Anbindung an Silizium über ein Kohlenstoffatom und/oder ein Heteroatom erfolgen kann.

**7.** Verwendung der Polyorganosiloxane oder Silane nach einem der Ansprüche 1 bis 6, **dadurch gekennzeichnet, dass** die Reste $R^F$ aus der Gruppe ausgewählt werden, die besteht aus:

- Zwitterionische Gruppen-enthaltenden Resten, ausgewählt aus:

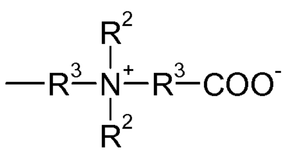

bzw. deren Neutralform:

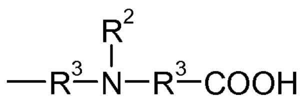

worin $R^2$ und $R^3$ gleich oder verschieden sind und wie oben definiert sind,
- Zwitterionische Gruppen-enthaltenden Resten, ausgewählt aus:

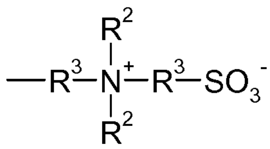

bzw. deren Neutralform

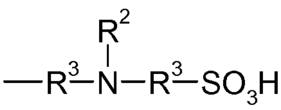

worin $R^2$ und $R^3$ gleich oder verschieden sind und wie oben definiert sind,
- Carbonsäure-/Carboxylatgruppen enthaltenden Resten, ausgewählt aus:

$-R^3-COOR^2$

,

$-R^3-COO^-$

worin $R^2$ und $R^3$ jeweils wie oben definiert sind,
- über O an Si gebundene Acyloxy-Gruppen, ausgewählt aus:

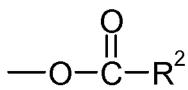
,

worin $R^2$ wie oben definiert ist,

und die Kationen, welche die anionischen funktionellen Gruppen neutralisieren, ausgewählt werden aus der Gruppe, die besteht aus:

Ammoniumgruppen ($N^+(R^2)_4$, worin $R^2$ wie oben definiert ist),
Phosphoniumgruppen ($P^+(R^2)_4$, worin $R^2$ wie oben definiert ist), sowie ein- bis dreiwertigen Metallkationen,

und die Anionen, welche die kationischen funktionellen Gruppen neutralisieren, ausgewählt werden aus der Gruppe, die besteht aus:

Halogenid,
Hydroxid,
Borat,
Sulfat,
Phosphat,
Nitrat und
Carboxylat.

**8.** Verwendung der Polyorganosiloxane nach einem der Ansprüche 1 bis 7, **dadurch gekennzeichnet, dass** sie

mindestens einen Rest der Formel $M^F$ enthalten:

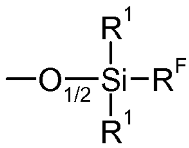

,

worin $R^1$ und $R^F$ wie oben definiert sind.

**9.** Verwendung der Polyorganosiloxane nach einem der Ansprüche 1 bis 8, **dadurch gekennzeichnet, dass** sie ausgewählt sind aus den Formeln:

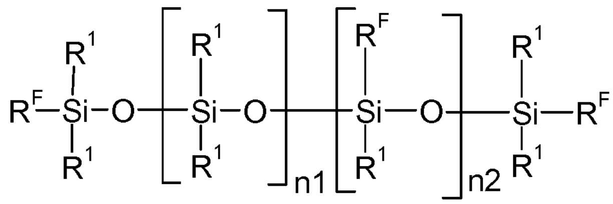

(III)

worin n1 + n2 = 1 bis 28, und n2 $\geq$ 0, und $R^1$ und $R^F$ wie oben definiert sind,

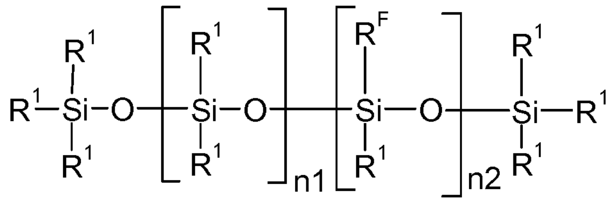

(IV)

worin n1 + n2 = 1 bis 28, und n2 $\geq$ 1, und $R^1$ und $R^F$ wie oben definiert sind, und

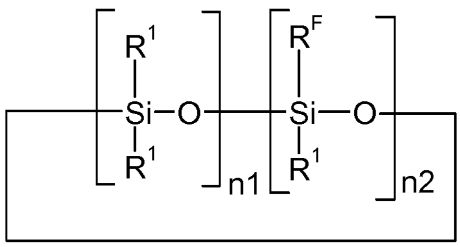

(V)

verwendet, worin n1 + n2 = 3 bis 7, und n2 $\geq$ 1, und $R^1$ und $R^F$ wie zuvor definiert sind.

**10.** Verwendung der Polyorganosiloxane nach einem der Ansprüche 1 bis 8, **dadurch gekennzeichnet, dass** sie die Formel

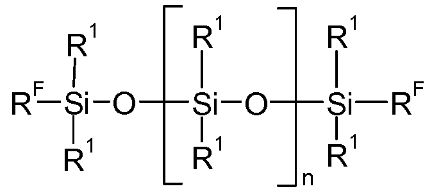

(VI)

aufweisen, worin n im Zahlenmittel 0 bis 28 ist, und $R^1$ und $R^F$ wie oben definiert sind.

**11.** Verwendung der Zusammensetzungen enthaltend mindestens ein Polysiloxan und/oder Silan, wie in einem der Ansprüche 1 bis 10 definiert, und mindestens ein Lösungsmittel und/oder mindestens einen bioziden Wirkstoff zur Behandlung von lignocellulosischen Werkstoffen.

**12.** Verwendung der Zusammensetzung enthaltend

a) mindestens ein Polysiloxan und/oder Silan wie in einem der Ansprüche 1 bis 10 definiert, die eine funktionelle Gruppe F ausgewählt aus der Gruppe der sauren funktionellen Gruppen:

- Zwitterionische Gruppe, und
- Carbonsäure/Carboxylat-Gruppe,

aufweisen, sowie
b) mindestens ein Polysiloxan und/oder Silan, die eine basische funktionelle Gruppe aufweisen, ausgewählt aus Amino-Gruppen, Ammonium-Gruppen, Phosphonium-Gruppen und Phosphin-Gruppen.

**13.** Verfahren zur Behandlung lignocellulosischer Werkstoffe, umfassend die Behandlung des lignocellulosischen Werkstoffs mit mindestens einem Polysiloxan oder Silan, wie in einem der Ansprüche 1 bis 10 definiert, oder einer Zusammensetzung nach Anspruch 11 oder 12 durch Oberflächenbehandlung, Tauchbehandlung oder Vakuum- oder Druck-Imprägnierung.

**14.** Verwendung von mindestens einem Polysiloxan oder Silan, wie in einem der Ansprüche 1 bis 11 definiert, oder einer Zusammensetzung nach Anspruch 11 oder 12 zur Behandlung von lignocellulosischen Werkstoffen zur Abwehr von Termiten mit oder ohne zusätzliche Insektizide zur Termitenbekämpfung.

**15.** Lignocellulosischer Werkstoff, enthaltend mindestens ein Polysiloxan und/oder Silan, wie in einem der Ansprüche 1 bis 10 oder eine Zusammensetzung wie in Anspruch 11 oder 12 definiert.

## Claims

**1.** Use of polyorganosiloxanes or silanes for the treatment of lignocellulosic materials, characterized therein that the polyorganosiloxanes are linear, branched or cyclic polyorganosiloxanes, which in the number average consist of 2 to 30 siloxy units, which are selected from the group consisting of:

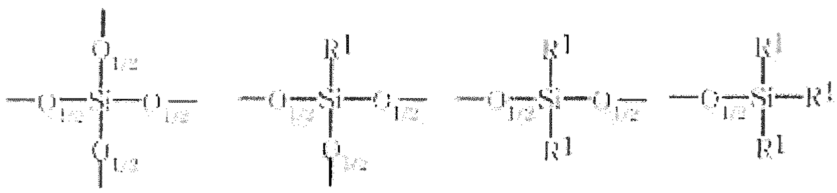

(Q) (T) (D) (M)

wherein the residues $R^1$ represent organic residues, which may be the same or different from each other, with the

proviso, that at least one residue $R^1$ is a residue $R^F$, which contains a functional group F, which is selected from the group of functional groups, which consists of:

- zwitterionic groups,
- carboxylic acid/carboxylate groups, and
- acyloxy groups bonded to Si via O,

and **characterized in that** the silanes have the formula (I)

$$Si\text{-}(R^1)_4 \qquad (I)$$

wherein the residues $R^1$ are defined as above, with the proviso, that at least one residue $R^1$ is a residue $R^F$, which contains a functional group F, which is defined as above, and at least one of the residues $R^1$ is bonded to the silicon atom via a hetero atom and at least one of the residues $R^1$ is bonded to the silicon atom via a carbon atom,
or the formula (II)

$$(R^1)_3\text{—}Si\text{—}R^3\text{—}Si\text{—}(R^1)_3 \qquad (II)$$

wherein $R^1$ is the same or different and is as defined for formula (I), and $R^3$ is a divalent linear, branched, cyclic, aliphatic, unsaturated or aromatic hydrocarbon residue with up to 30 carbon atoms, which may contain one or more groups selected from -O-, $-NR^4-$, wherein $R^4$ is hydrogen or a C1-C22 alkyl, -C(O)- and -C(S)-, and can be optionally substituted by a hydroxy group and is bonded to the silicon atom via carbon,
and of the salts thereof.

**2.** Use of the polyorganosiloxanes or silanes according to claim 1, **characterized in that** the residues $R^1$ are selected from the group of the residues $R^F$ and $R^N$, wherein the residues $R^F$ are such residues $R^1$, which have said functional groups F and wherein the residues $R^N$ are such residues $R^1$, which do not have the said functional groups F.

**3.** Use of the polyorganosiloxanes according to claim 1 or 2, **characterized in that** the molar ratio of the residues $R^F$, which contain at least one functional group F, is 3.33 to 100 mol-% based on the number of the siloxy units.

**4.** Use of the polyorganosiloxanes according to one of the claims 1 to 3, **characterized in that** the molar ratio of the branching residues T and Q is 0 to 50 mol-% based on the number of the siloxy units.

**5.** Use of the polyorganosiloxanes according to one of the claims 1 to 4, **characterized in that** the number-average number of siloxy units is 2 to 20.

**6.** Use of the polyorganosiloxanes or silanes according to one of the claims 1 to 5, **characterized in that** the substituents $R^1$ are selected from the group consisting of:

linear, cyclic or branched, saturated, unsaturated or aromatic hydrocarbon residues with up to 100 carbon atoms, which may optionally contain one or more groups selected from

-O-

-S-

$-NR^2-$,

wherein $R^2$ represents hydrogen, a monovalent linear, cyclic or branched, saturated, unsaturated or aromatic hydrocarbon residue with up to 60 carbon atoms, which may contain one or more groups selected from -O-, -S-, -NH-, -C(O)- and -C(S)-, and which may optionally be substituted with one or more substituents, selected from the group that consists of an hydroxyl group, an optionally substituted heterocyclic group that preferably contains one or more nitrogen atoms, amino, alkyl amino, dialkyl amino, ammonium, polyether residues and polyether ester residues, wherein when several groups $-NR^2$ are present, these may be the same or different

from each other,

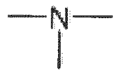

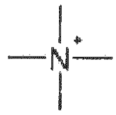

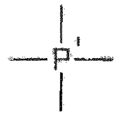

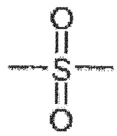

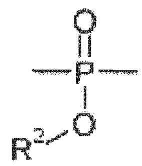

wherein $R^2$ is as defined above,
$-P(R^2)_2$, wherein $R^2$ is as defined above,
-C(O)- and
-C(S)-,
and may be substituted with one or more residues selected from the group consisting of:

- hydroxyl,
- mercapto (-SH or $-S^-$),
- isocyanato,
- halogen,
- a polyether residue with up to 60 carbon atoms, which may optionally bear one or more amino, mono- or dialkyl amino, or aryl amino groups,
- a saccharide-containing organic residue,

or two substituents $R^1$ of different siloxy units together form a linear, branched or cyclic alkanediyl residue with 2 to 20 carbon atoms between two silicon atoms, which is optionally interrupted by -O-, -S-, -C(O)-, -NH- and is optionally substituted by OH,
wherein the bonding to silicon may take place via a carbon atom and/or a heteroatom.

**7.** Use of the polyorganosiloxanes or silanes according to one of the claims 1 to 6, **characterized in that** the groups $R^F$ are selected from the group consiting of:

- zwitterionic group-containing residues, selected from

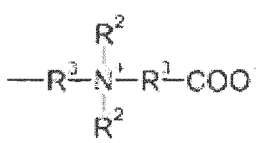

or their neutral form:

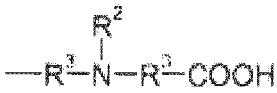

,

respectively, wherein $R^2$ and $R^3$ are the same or different, and are as defined above,
- zwittterionic group-containing residues, selected from:

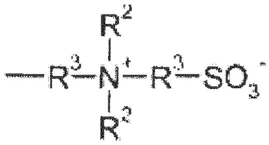

or their neutral form

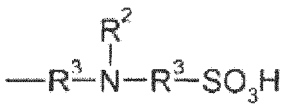

respectively, wherein $R^2$ and $R^3$ are the same or different and as defined above,
- carboxylic acid/carboxylate group-containing residues, selected from:

$-R^3-COOR^2$

,

$-R^3-COO^-$

wherein $R^2$ and $R^3$ are each as defined above,
- acyloxy groups bonded to Si via O, selected from:

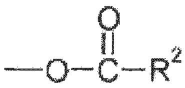

,

wherein $R^2$ is as defined above,
and the cations which neutralize the anionic functional groups are selected from the group consisting of:

ammonium groups ($N^+(R^2)_4$, wherein $R^2$ is as defined above),
phosphonium groups ($P^+(R^2)_4$, wherein $R^2$ is as defined above), and mono- to trivalent metal cations,

and the anions which neutralize the cationic functional groups are selected from the group consisting of:

halogenide,
hydroxide,
borate,
sulfate,
phosphate,
nitrate and
carboxylate.

**8.** Use of the polyorganosiloxanes according to one of the claims 1 to 7, **characterized in that** they contain at least one residue of the formula $M^F$:

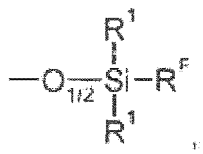

wherein $R^1$ and $R^F$ are as defined above.

**9.** Use of the polyorganosiloxanes according to one of the claims 1 to 8, **characterized in that** they are selected from the formulas:

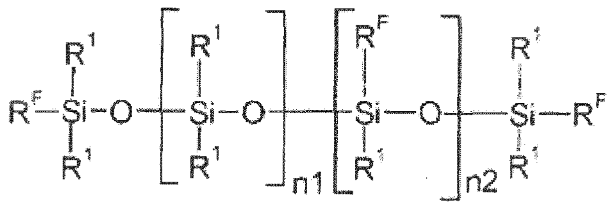

(III)

wherein n1 + n2 = 1 to 28, and n2 ≥ 0, and $R^1$ and $R^F$ are as defined above,

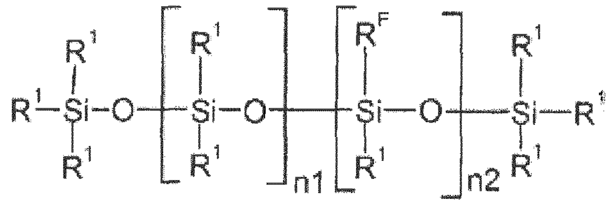

(IV),

wherein n1 + n2 = 1 to 28, and n2 ≥ 1, and $R^1$ and $R^F$ are as defined above, and

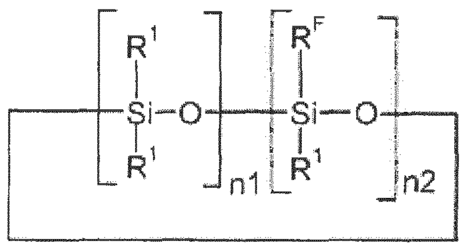

(V)

is applied, wherein n1 + n2 = 3 to 7, and n2 ≥ 1, and $R^1$ and $R^F$ are as previously defined.

**10.** Use of the polyorganosiloxanes according to one of the claims 1 to 8, **characterized in that** they have the formula

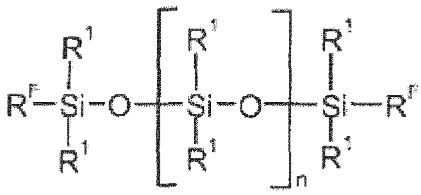

(VI)

wherein n is a number average of 0 to 28, and $R^1$ and $R^F$ are as defined above.

**11.** Use of the compositions containing at least one polysiloxane and/or silane as defined in one of the claims 1 to 10, and at least one solvent and/or at least one biocidal active ingredient for the treatment of lignocellulosic materials.

**12.** Use of the composition containing

a) at least one polysiloxane and/or silane as defined in one of the claims 1 to 10, which have a functional group F selected from the group of the acidic functional groups:

- zwitterionic group, and
- carboxylic acid/carboxylate group, as well as

b) at least one polysiloxane and/or silane, which have a basic functional group selected from amino groups, ammonium groups, phosphonium groups and phosphine groups.

**13.** Process for the treatment of lignocellulosic materials, comprising the treatment of the lignocellulosic material with at least one polysiloxane or silane as defined in one of the claims 1 to 10, or a composition according to claim 11 or 12 by surface treatment, dip coating or vacuum- or pressure impregnation.

**14.** Use of at least one polysiloxane or silane as defined in one of the claims 1 to 10, or of a composition according to claims 11 to 12 for the treatment of lignocellulosic materials for the repellence of termites with or without additional insecticides for termite repellence.

**15.** Lignocellulosic material containing at least one polysiloxane and/or silane as defined in one of the claims 1 to 10 or a composition as defined in claim 11 or 12.

## Revendications

**1.** Utilisation de polyorganosiloxanes ou de silanes pour traiter des matériaux lignocellulosiques, **caractérisée en ce que** les polyorganosiloxanes sont des polyorganosiloxanes linéaires, ramifiés ou cycliques, qui sont produits en nombre à partir de 2 à 30 motifs siloxy, qui sont choisis parmi le groupe qui est constitué de :

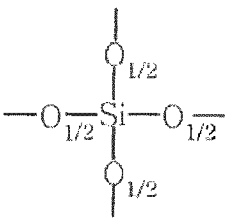 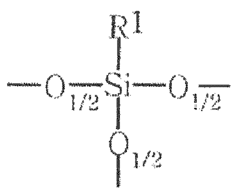 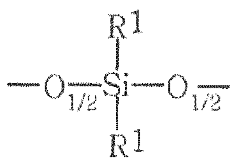 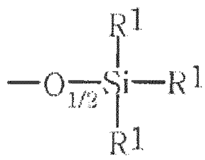

(Q) (T) (D) (M)

où les radicaux $R^1$ représentent des radicaux organiques, qui peuvent être identiques ou différents les uns des autres à condition qu'au moins un des radicaux $R^1$ soit un radical $R^F$, qui contient un groupe fonctionnel F qui est choisi parmi le groupe des groupes fonctionnels, qui est constitué de :

- groupes zwittérioniques,
- groupes acide carboxylique/carboxylate, et
- groupes acyloxy liés à Si par l'intermédiaire de O,

et **caractérisée en ce que** les silanes présentent la formule (I)

$Si\text{-}(R^1)_4$ (I),

où les radiaux $R^1$ sont définis tels que ci-dessus à condition qu'au moins un des radicaux $R^1$ soit un radical $R^F$, qui contient un groupe fonctionnel F, qui est défini tel que ci-dessus, et au moins un des radicaux $R^1$ soit lié à l'atome de silicium par l'intermédiaire d'un hétéroatome ou au moins un des radicaux $R^1$ soit lié à l'atome de silicium par l'intermédiaire d'un atome de carbone,
ou la formule (II)

$$(R^1)_3-Si-R^3-Si-(R^1)_3 \quad (II)$$

où $R^1$ est identique ou différent et est défini tel que pour la formule (I) et $R^3$ est un radical hydrocarboné bivalent, linéaire, ramifié, cyclique, aliphatique, insaturé ou aromatique avec jusqu'à 30 atomes de carbone, qui peut contenir un ou plusieurs groupes choisis parmi -O-, $-NR^4-$, où $R^4$ est de l'hydrogène ou un alkyle en $C_1$-$C_{22}$, -C(O)- et -C(S)-, et peut être substitué éventuellement par de l'hydroxy et est lié à l'atome de silicium par l'intermédiaire de carbone, et de leurs sels.

2. Utilisation des polyorganosiloxanes ou des silanes selon la revendication 1,
**caractérisée en ce que** les radiaux $R^1$ sont choisis parmi le groupe des radicaux $R^F$ et $R^N$, dans laquelle les radicaux $R^F$ sont des radicaux $R^1$ qui présentent les groupes dits fonctionnels F et les radicaux $R^N$ sont des radicaux $R^1$, qui ne présentent pas les groupes dits fonctionnels F.

3. Utilisation des polyorganosiloxanes selon la revendication 1 ou 2, **caractérisée en ce que** la fraction molaire des radicaux $R^F$, qui contiennent au moins un groupe fonctionnel F, va de 3,33 à 100 % en mole par rapport au nombre des motifs siloxy.

4. Utilisation des polyorganosiloxanes selon l'une quelconque des revendications 1 à 3, **caractérisée en ce que** la fraction molaire des radicaux ramifiés T et Q va de 0 à 50 % en mole par rapport au nombre des motifs siloxy.

5. Utilisation des polyorganosiloxanes selon l'une quelconque des revendications 1 à 4, **caractérisée en ce que** le nombre moyen en nombre des motifs siloxy va de 2 à 20.

6. Utilisation des polyorganosiloxanes ou des silanes selon l'une quelconque des revendications 1 à 5, **caractérisée en ce que** les substituants $R^1$ sont choisis parmi le groupe qui est constitué de :

radicaux hydrocarbonés linéaires, cycliques ou ramifiés, saturés, insaturés ou aromatiques avec jusqu'à 100 atomes de carbone, qui peuvent contenir éventuellement un ou plusieurs groupes choisis parmi

-O-,

-S-,

$-NR^2-$,

où $R^2$ représente un radical hydrocarboné monovalent, linéaire, cyclique ou ramifié, saturé, insaturé ou aromatique avec jusqu'à 60 atomes de carbone, qui peut contenir un ou plusieurs groupes choisis parmi -O-, -S-, -NH-, -C(O)- et -C(S)-, et qui peut être substitué éventuellement par un ou plusieurs substituants choisis parmi le groupe qui est constitué d'un groupe hydroxyle, d'un groupe hétérocyclique éventuellement substitué, contenant de manière préférée un ou plusieurs atomes d'azote, de l'amino, de l'alkylamino, du dialkylamino, de l'ammonium, de radicaux de polyéther et de radicaux de polyétherester, dans laquelle quand plusieurs groupes $-NR^2-$ sont présents, ceux-ci peuvent être identiques ou différents, peuvent contenir

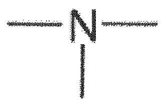

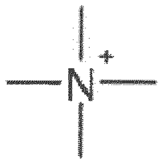

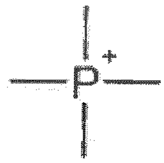

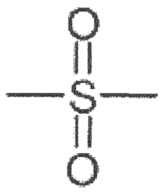

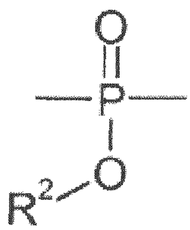

où $R^2$ est tel que défini ci-dessus,

$-P(R^2)_2$,

où $R^2$ est tel que défini ci-dessus,

- C(O)- et
- C(S)-,

et peut être substitué par un ou plusieurs radicaux, qui sont choisis parmi le groupe, qui est constitué de :

- hydroxyle,
- mercapto (-SH ou $-S^-$)
- isocyanoto,
- halogène
- un radical de polyéther avec jusqu'à 60 atomes de carbone, qui peut supporter éventuellement un ou plusieurs groupes amino, mono ou dialkylamino ou arylamino,
- un radical organique contenant du saccharide,

ou deux substituants $R^1$ composés de différents motifs siloxy forment conjointement un radical alcanediyle linéaire, ramifié ou cyclique, interrompu éventuellement par -O-, -S-, -C(O)- et -NH- et substitué éventuellement

par OH avec 2 à 20 atomes de carbone entre deux atomes de silicium,
dans laquelle la liaison au silicium peut être réalisée par l'intermédiaire d'un atome de carbone et/ou d'un hétéroatome.

**7.** Utilisation des polyorganosiloxanes ou des silanes selon l'une quelconque des revendications 1 à 6, **caractérisée en ce que** les radicaux $R^F$ sont choisis parmi le groupe, qui est constitué de :

- radicaux contenant des groupes zwittérioniques, choisis parmi :

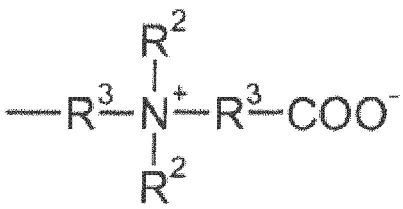

ou sa forme neutre :

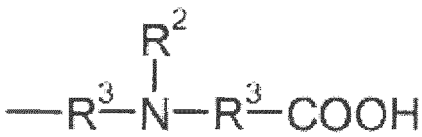

où $R^2$ et $R^3$ sont identiques ou différents et sont définis tels que ci-dessus,
- radicaux contenant des groupes zwittérioniques, choisis parmi :

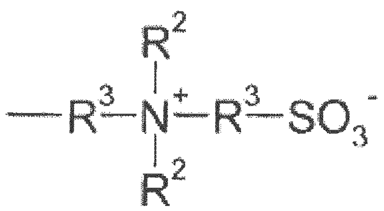

ou sa forme neutre

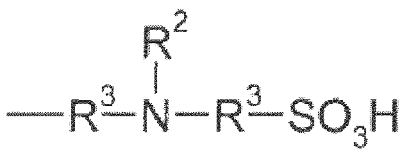

où $R^2$ et $R^3$ sont identiques ou différents et sont définis tels que ci-dessus,
- radicaux contenant des groupes acide carboxylique/carboxylate, choisis parmi :

$-R^3-COOR^2$

,

$-R^3-COO^-$

où $R^2$ et $R^3$ sont respectivement définis tels que ci-dessus,
- groupes acyloxy liés à Si par l'intermédiaire d'O, choisis parmi :

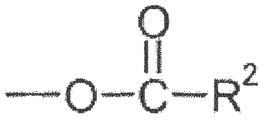

,

où $R^2$ est défini tel que ci-dessus,
et les cations, lesquels neutralisent les groupes fonctionnels anioniques, sont choisis parmi le groupe, qui est constitué de :

groupes ammonium ($N^+(R^2)_4$, où $R^2$ est défini tel que ci-dessus),
groupes phosphonium ($P^+(R^2)_4$, où $R^2$ est défini tel que ci-dessus), ainsi que des cations métalliques mono- à trivalents,
et les anions, lesquels neutralisent les groupes fonctionnels cationiques, sont choisis parmi le groupe, qui est constitué de :

halogénure,
hydroxyde,
borate,
sulfate,
phosphate,
nitrate et
carboxylate.

**8.** Utilisation des polyorganosiloxanes selon l'une quelconque des revendications 1 à 7, **caractérisée en ce qu'**ils contiennent au moins un radical de la formule $M^F$ :

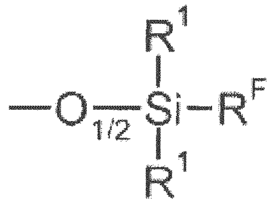

,

où $R^1$ et $R^F$ sont définis tels que ci-dessus.

**9.** Utilisation des polyorganosiloxanes selon l'une quelconque des revendications 1 à 8, **caractérisée en ce qu'**ils sont choisis parmi les formules :

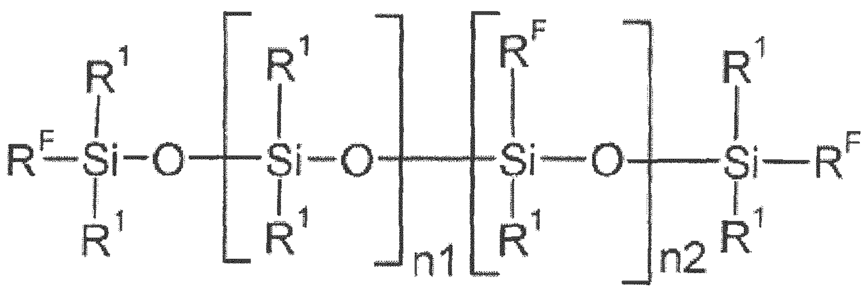

(III)

où n1 + n2 = 1 à 28, et n2 ≥ 0, et $R^1$ et $R^F$ sont définis tels que ci-dessus,

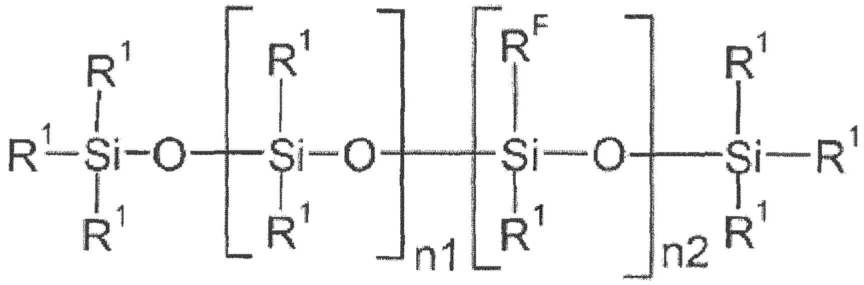

(IV)

où n1 + n2 = 1 à 28, et n2 ≥ 1, et $R^1$ et $R^F$ sont définis tels que ci-dessus, et

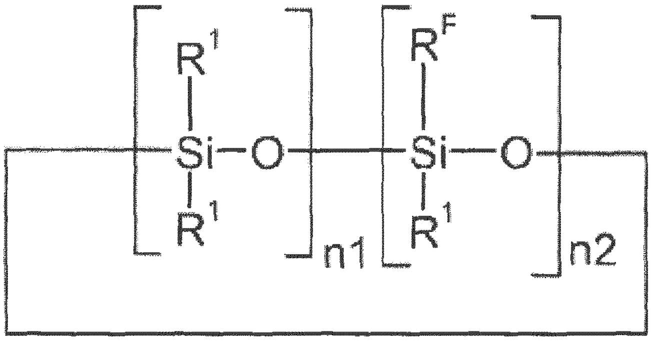

(V)

où n1 + n2 = 3 à 7, et n2 ≥ 1, et $R^1$ et $R^F$ sont définis tels que ci-dessus.

**10.** Utilisation des polyorganosiloxanes selon l'une quelconque des revendications 1 à 8, **caractérisée en ce qu'**ils présentent la formule

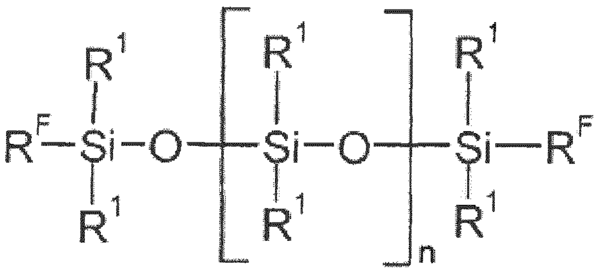

(VI)

,

où n va en nombre moyen de 0 à 28, et $R^1$ et $R^F$ sont définis tels que ci-dessus.

**11.** Utilisation des compositions contenant au moins un polysiloxane et/ou un silane, tels que définis dans l'une quelconque des revendications 1 à 10, et au moins un solvant et/ou au moins un principe actif biocide pour traiter des matériaux lignocellulosiques.

**12.** Utilisation de la composition contenant

a) au moins un polysiloxane et/ou un silane tels que définis dans l'une quelconque des revendications 1 à 10, qui présentent un groupe fonctionnel F choisi parmi le groupe des groupes fonctionnels acides :

- groupe zwittérionique, et
- groupe acide carboxylique/carboxylate, ainsi que

b) au moins un polysiloxane et/ou un silane, qui présentent un groupe fonctionnel basique choisi parmi des groupes amino, des groupes ammonium, des groupes phosphonium et des groupes phosphine.

**13.** Procédé servant à traiter des matériaux lignocellulosiques, comprenant le traitement du matériau lignocellulosique avec au moins un polysiloxane ou un silane, tel que défini dans l'une quelconque des revendications 1 à 10, ou avec une composition selon la revendication 11 ou 12 par un traitement de surface, un traitement par immersion ou une imprégnation sous vide ou sous pression.

**14.** Utilisation d'au moins un polysiloxane ou d'un silane, tel que défini dans l'une quelconque des revendications 1 à 11, ou d'une composition selon la revendication 11 ou 12 pour traiter des matériaux lignocellulosiques aux fins de la protection contre les termites avec ou sans insecticides supplémentaires termicides.

**15.** Matériau lignocellulosique, contenant au moins un polysiloxane et/ou un silane, tels que définis dans l'une quelconque des revendications 1 à 10, ou une composition telle que définie dans la revendication 11 ou 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002348567 A
- US 6294608 B
- EP 0716127 A
- EP 0716128 A
- US 20020026881 A
- US 4757106 A
- DE 3447636
- EP 0621115 A
- DE 4241727
- DE 102004036918
- DE 4202320
- EP 680810 A
- US 5672338 A
- US 5686547 A
- DE 19505892
- WO 2005058863 A
- DE 4318536
- WO 2008113820 A
- US 5093518 A
- DE 10036532
- DE 4140447
- DE 4318539
- US 5859161 A
- US 6175028 B
- WO 2005049170 A
- EP 1128939 A
- EP 1146969 A
- EP 1501664 A


### In der Beschreibung aufgeführte Nicht-Patentliteratur


- Silicone, Chemie und Technologie. Vulkan Verlag Essen, 1989, 121
- Organikum. VEB Deutscher Verlag der Wissenschaften, 1988, 203
- Silicone, Chemie und Technologie. Vulkan Verlag Essen, 1989, 90
- Organikum. VEB Deutscher Verlag der Wissenschaften, 1988, 429
- Organikum. VEB Deutscher Verlag der Wissenschaften, 1988, 396-400
- Organikum. VEB Deutscher Verlag der Wissenschaften, 1988, 390-400
- Silicone, Chemie und Technologie. Vulkan Verlag Essen, 1989, 58
- **V. BAZANT.** Organosilicon Compounds. Academic Press, 1965, vol. 1, 61-64
- Silicone, Chemie und Technologie. Vulkan Verlag Essen, 1989, 5
- **ULF LOHMANN.** Holzlexikon von A-Z. DRW-Verlag, 2003, vol. I, II
- *Einbringverfahren,* vol. I, 289-292
- *Holztrocknung,* vol. I, 605
- **MORRELL ; LEVIEN.** Entwicklung Neuer Behandlungsverfahren zum Holzschutz. *Konferenz für Holzschutz in den 90er Jahren und darüber hinaus,* 26. September 1994